(19) Europäisches Patentamt
European Patent Office
Office européen des brevets

(11) **EP 1 664 157 B1**

(12) **EUROPÄISCHE PATENTSCHRIFT**

(45) Veröffentlichungstag und Bekanntmachung des Hinweises auf die Patenterteilung:
**12.11.2008   Patentblatt 2008/46**

(21) Anmeldenummer: **04787199.1**

(22) Anmeldetag: **23.09.2004**

(51) Int Cl.:
*C08J 3/09* $^{(2006.01)}$        *C08L 21/00* $^{(2006.01)}$

(86) Internationale Anmeldenummer:
**PCT/EP2004/052290**

(87) Internationale Veröffentlichungsnummer:
**WO 2005/030843 (07.04.2005 Gazette 2005/14)**

(54) **MIKROGELE IN NICHT-VERNETZBAREN ORGANISCHEN MEDIEN**

MICROGELS IN NON-CROSSLINKABLE ORGANIC MEDIA

MICROGELS CONTENUS DANS DES MILIEUX ORGANIQUES NON-RETICULABLES

(84) Benannte Vertragsstaaten:
**AT BE BG CH CY CZ DE DK EE ES FI FR GB GR HU IE IT LI LU MC NL PL PT RO SE SI SK TR**

(30) Priorität: **27.09.2003   DE 10344975**

(43) Veröffentlichungstag der Anmeldung:
**07.06.2006   Patentblatt 2006/23**

(73) Patentinhaber:
• **Rhein Chemie Rheinau GmbH**
**68219 Mannheim (DE)**
• **LANXESS Deutschland GmbH**
**51369 Leverkusen (DE)**

(72) Erfinder:
• **ZISER, Torsten**
**69488 Birkenau (DE)**
• **FRÜH, Thomas**
**67117 Limburgerhof (DE)**
• **GALDA, Patrick**
**76149 Karlsruhe (DE)**
• **OBRECHT, Werner**
**47447 Moers (DE)**

(74) Vertreter: **Gille Hrabal Struck Neidlein Prop Roos Patentanwälte**
**Brucknerstrasse 20**
**40593 Düsseldorf (DE)**

(56) Entgegenhaltungen:
**EP-A- 0 859 015            EP-A- 1 048 692**
**WO-A-02/12389              US-A- 4 749 506**

• **PATENT ABSTRACTS OF JAPAN Bd. 0144, Nr. 35 (C-0760), 18. September 1990 (1990-09-18) & JP 2 170848 A (NIPPON OIL & FATS CO LTD), 2. Juli 1990 (1990-07-02)**

**Beschreibung**

Die Erfindung betrifft eine Zusammensetzung, die mindestens ein spezifisches nicht-vernetzbares Medium und mindestens ein Mikrogel aufweist, welches durch Emulsionspolymerisation hergestellt wird, Verfahren zu ihrer Herstellung, Verwendungen der Zusammensetzungen, und daraus hergestellte Mikrogel-enthaltende Polymere, Kautschuke, Schmierstoffe, Beschichtungen.

Es ist bekannt, Kautschukgele, auch modifizierte Kautschukgele, in Abmischungen mit verschiedensten Kautschuken einzusetzen, um beispielsweise den Rollwiderstand bei der Herstellung von Kfz-Reifen zu verbessern (siehe z. B. DE 42 20 563, GB-PS 10 78 400 EP 405 216 und EP 854 171). Hierbei werden die Kautschukgele immer in feste Matrices eingearbeitet.

Bekannt ist auch, Druckfarbenpigmente in dafür geeigneten flüssigen Medien fein verteilt einzuarbeiten, um letztendlich Druckfarben herzustellen (siehe z. B. EP 0 953 615 A2, EP 0 953 615 A3). Hierbei werden Teilchengrößen von bis hinab zu 100 nm erreicht.

Für die Dispergierung können verschiedene Dispergierapparate wie Kneter, Perlmühle, Dreiwalze oder Homogenisator, Ein- oder Mehrwellen-Extruderschnecke, und/oder eines Dissolvers verwendet werden. Die Verwendung von Homogenisatoren sowie deren Funktionsweise ist beschrieben im Marketing Bulletin der Fa. APV Homogeniser Group-"High-pressure homogenisers processes, product and applications" von William D. Pandolfe und Peder Baekgaard, hauptsächlich für die Homogenisierung von Emulsionen.

Nicht beschrieben in den genannten Dokumenten wird der Einsatz von Kautschukgelen als Feststoffkomponente in Mischungen mit flüssigen organischen Medien mit dem Ziel, feinstverteilte Kautschukgeldispersionen mit Teilchendurchmessern deutlich unter einem $\mu$m herzustellen sowie deren Homogenisierung mittels eines Homogenisators.

In Chinese Journal of Polymer Science, Band 20, Nr. 2, (2002), 93 - 98, werden durch energiereiche Strahlung vollständig vernetzte Mikrogele und ihre Verwendung zur Erhöhung der Schlagzähigkeit von Kunststoffen beschrieben. Bei der Herstellung spezieller Epoxyharzzusammensetzungen tritt intermediär eine Mischung aus einem strahlenvernetzten carboxylendgestoppten Nitril-Butadien-Mikrogel und dem Diglycidylether von Bisphenol A, einem vernetzbaren organischen Medium, auf. Weitere flüssige Mikrogel-enthaltende Zusammensetzungen werden nicht beschrieben.

Ähnlich offenbart die US 20030088036 A1 verstärkte wärmehärtende Harzzusammensetzungen, bei deren Herstellung ebenfalls strahlenvernetzte Mikrogelpartikel mit wärmehärtenden Prepolymeren vermischt werden (s. a. EP 1262510 A1).

Aus der DE 2910154 sind Dispersionen von Kautschukteilchen mit organischen Lösungsmitteln bekannt. Diese werden durch Versetzen eines wässrigen Kautschuk-Latex mit den Lösungsmitteln unter Zusatz eines Dispergators hergestellt. Zwar erwähnt diese Schrift auch die Möglichkeit, dass aus dem Latex resultierende Wasser zu entfernen. Wasserfreie Dispersionen werden jedoch nicht beschrieben. Dispersionen, die im wesentlichen wasserfrei sind, können nach diesem Verfahren praktisch nicht erhalten werden (s. a. die Würdigung in der DE-A-3742180, Seite 2, Zeile 10, des selben Anmelders). Dies ist jedoch bei zahlreichen Anwendungen nachteilig. Weiterhin enthalten die in den genannten Patenten beschriebenen Dispersionen zwingend zusätzliche Dispergatoren bzw. Emulgatoren um eine homogene Verteilung der wässrigen und der organischen Phasen zu erzielen. Die Anwesenheit solcher Emulgatoren bzw. Dispergatoren ist jedoch in vielen Anwendungen sehr störend. Außerdem sind die dort beschriebenen Kautschuk-Partikel relativ grobteilig.

Aus der DE-A-3742180 sind Dispersionen von silicon-haltigen Pfropfpolymerisaten in flüssigen Amiden bekannt, die ebenfalls aus wässrigen Latices hergestellt werden. Bei den dort beschriebenen Dispersionen wird das Wasser jedoch nur weitgehend abgetrennt und eine vollständige Abtrennung ist schwierig. Die silicon-haltigen Pfropfpolymerisate sind außerdem sehr grobteilig (240 nm). Die dort beschriebenen Dispersionen können zur Verbesserung des Fibrillierungsverhalten von PAN-Folien verwendet werden. Aufgrund ihres speziellen Aufbaus mit Silicon-Kern und Acrylathülle sind die Pfropfpolymerisate jedoch insbesondere für die Anwendung in Schmierstoffen durch ihre Unverträglichkeit ungeeignet.

Die Erfinder der vorliegenden Erfindung fanden nun, dass es möglich ist, Mikrogele in flüssigen organischen Medien bestimmter Viskosität beispielsweise mit einem Homogenisator fein zu verteilen. Die Zerteilung der Mikrogele in dem organischen Medium bis in den Primärpartikelbereich ist beispielsweise eine Voraussetzung, um die Nanoeigenschaften der Mikrogele in jedweden Verwendungen, beispielsweise bei der Einarbeitung in Kunststoffen, insbesondere reproduzierbar nutzbar zu machen. Die erfindungsgemäßen, flüssigen, die speziellen Mikrogele enthaltenden Zusammensetzungen können eine Vielzahl neuer Anwendungen von Mikrogelen erschließen, die mit den Mikrogelen selbst bislang nicht zugänglich waren.

So können zum Beispiel in einer Ausführungsform der Erfindung die erfindungsgemäßen, Zusammensetzungen aufgrund der erzielbaren feinen Verteilungen beispielsweise in Kunststoffe und Schmierstoffen eingearbeitet werden, wodurch völlig neue Eigenschaften erhalten werden. So zeigen erfindungsgemäße Zusammensetzungen überraschenderweise gegenüber kommerziellen Fetten vergleichbares Verhalten (Absetzstabilität, geringe Ölabscheidung, Konsistenz); sie besitzen jedoch ein günstigeres Verhalten hinsichtlich z. B. Scherstabilität (d.h. fast keine Änderung der Penetrationswerte nach Walken mit 60.000 Hüben) und außerordentlich hohe Tropfpunkte wie sie sonst nur von wärmefesten Fetten, wie z.B. PU-Fetten oder Ca-Komplexfetten, erreicht werden. Zudem zeigen die erfindungsgemäßen Zusammensetzungen eine positive Wirkung auf Reibwerte, was völlig untypisch ist bei Standardfetten.

Die erfindungsgemäßen Mikrogel-enthaltenden Zusammensetzungen können auf einer Vielzahl von Gebieten Anwendung finden, wie z. B. in elastomeren PU-Systemen (Kaltgießsysteme und Heißgießsysteme), in Beschichtungsmitteln oder als Schmierstoffadditive. In den erfindungsgemäßen Mikrogel-enthaltenden Zusammensetzungen bilden an sich unverträgliche Materialien eine homogene Verteilung, die auch bei längerer Lagerung (6 Monate) stabil bleibt.

P. Pötschke et al., Kautschuk Gummi Kunststoffe, 50 (11) (1997) 787 zeigen, dass bei unverträglichen Materialien wie z. B. p-Phenylendiamin-Derivat als dispergierte Phase und TPU als umgebender Phase keine Domänen kleiner als 1,5 $\mu$m realisiert werden können.

Es ist überraschend, dass mit den Mikrogel-Zusammensetzungen der vorliegenden Erfindung derartig kleine dispergierte Phasen erreicht werden.

Es wurden Mikrogel-haltige Zusammensetzungen gefunden, für die unterschiedlichstes rheologisches Verhalten festgestellt wurde. In geeigneten Mikrogel-haltigen Zusammensetzungen wurde überraschenderweise eine sehr starke Strukturviskosität oder Thixotropie, aber auch den Newton'schen Flüssigkeiten ähnliches Fließverhalten gefunden. Dies kann genutzt werden, um neben anderen Eigenschaften das Fließverhalten von beliebigen flüssigen Zusammensetzungen durch Mikrogele gezielt zu steuern.

Die vorliegende Erfindung stellt somit eine Zusammensetzung bereit, enthaltend mindestens ein nicht-vernetzbares organisches Medium (A), welches bei einer Temperatur von 120°C eine Viskosität von weniger als 30000 mPas aufweist, und mindestens ein Mikrogel (B), dadurch gekennzeichnet, dass das Mikrogel (B) durch Emulsionspolymerisation erhältlich ist und in einer Menge von 2 bis 90 Gew.-%, bezogen auf die Gesamtmenge der Zusammensetzung, in der Zusammensetzung vorliegt.

Bevorzugt ist die Viskosität des organischen Mediums weniger als 1000 mPas, bevorzugter weniger als 200 mPas, noch bevorzugter weniger als 100 mPas bei 120°C, noch bevorzugter weniger als 20 mPas bei 120°C. Die Viskosität des vernetzbaren, organischen Mediums (A) wird bei einer Drehzahl von 5 s$^{-1}$ mit einem Kegel-Platte-Meßsystem nach DIN 53018 bei 120°C bestimmt.

<u>Mikrogele (B)</u>

Das in der erfindungsgemäßen Zusammensetzung verwendete Mikrogel (B) ist ein vernetztes Mikrogel. In einer bevorzugten Ausführungsform handelt es sich nicht um ein durch energiereiche Strahlung vernetztes Mikrogel. Energiereiche Strahlung meint hier zweckmäßig elektromagnetische Strahlung einer Wellenlänge von weniger als 0,1 $\mu$m. Die Verwendung von durch energiereiche Strahlung vernetzten Mikrogelen, wie beispielsweise in Chinese Journal of Polymer Science, Band 20, Nr. 2, (2002), 93 - 98, beschrieben, ist nachteilig, da durch energiereiche Strahlung vernetzte Mikrogele in industriellem Maßstab praktisch nicht hergestellt werden können. Außerdem gehen mit der Verwendung energiereicher Strahlung aus radioaktiven Strahlungsquellen wie radioaktivem Kobalt schwerwiegende Sicherheitsprobleme einher. Da es sich weiterhin bei den strahlenvernetzten Mikrogelen in der Regel um vollständig strahlenvemetzte Mikrogele handelt, ist die Moduländerung, bei Einarbeitung der erfindungsgemäßen Zusammensetzung beispielsweise in Kunststoffe, von der Matrixphase zur dispergierten Phase unmittelbar. Hierdurch kann es bei schlagartiger Beanspruchung zu Abreißeffekten zwischen Matrix und dispergierter Phase kommen, wodurch die mechanischen Eigenschaften, das Quellverhalten und die Spannungsrisskorrosion der unter Verwendung der erfindungsgemäßen Zusammensetzungen hergestellten Mikrogel-enthaltenden Kunststoffe beeinträchtigt werden.

In einer bevorzugten Ausführungsform der Erfindung weisen die Primärpartikel des Mikrogels (B) eine annähernd kugelförmige Geometrie auf. Als Primärpartikel werden nach DIN 53206:1992-08 die durch geeignete physikalische Verfahren (Elektronenmikroskop), als Individuen erkennbare, in der kohärenten Phase dispergierten Mikrogelteilchen bezeichnet (Vgl. z. B. Römpp Lexikon, Lacke und Druckfarben, Georg Thieme Verlag, 1998). Eine "annähernd kugelförmige" Geometrie bedeutet, dass die dispergierten Primärpartikel der Mikrogele bei der Ansicht der Zusammensetzung, beispielsweise mit einem Elektronenmikroskop, erkennbar im wesentlichen eine kreisförmige Fläche abbilden. Da die Mikrogele bei der Weiterverarbeitung der erfindungsgemäßen Zusammensetzungen ihre Form bzw. Morphologie im wesentlichen nicht verändern, gelten die vorstehenden und nachstehenden Ausführungen in gleicher Weise auch für die mit der erfindungsgemäßen Zusammensetzung erhaltenen mikrogel-enthaltenden Zusammensetzungen, wie z. B. Kunststoffe, Beschichtungsmittel, Schmierstoffe oder dergleichen.

In den in der erfindungsgemäßen Zusammensetzung enthaltenen Primärpartikeln des Mikrogels (B) beträgt die Abweichung der Durchmesser eines einzelnen Primärpartikels, definiert als

$$[(d1 - d2) / d2] \times 100,$$

worin d1 und d2 zwei beliebige Durchmesser des Primärpartikels sind und d1 > d2 ist, bevorzugt weniger als 250 %, bevorzugter weniger als 100 %, noch bevorzugter weniger als 80 %, noch bevorzugter weniger als 50 %.

Bevorzugt weisen mindestens 80 %, bevorzugter mindestens 90 %, noch bevorzugter mindestens 95% der Primärpartikel des Mikrogels eine Abweichung der Durchmesser, definiert als

$$[ (d1 - d2) / d2] \times 100,$$

worin d1 und d2 zwei beliebige Durchmesser des Primärpartikels sind und d1 > d2 ist, von weniger als 250 %, bevorzugt weniger als 100 %, noch bevorzugter weniger als 80 %, noch bevorzugter weniger als 50 % auf.

Die vorstehend erwähnte Abweichung der Durchmesser der einzelnen Partikel kann nach folgendem Verfahren bestimmt werden. Zunächst wird ein Dünnschnitt der erfindungsgemäßen verfestigten Zusammensetzung hergestellt. Dann wird eine transmissionselektronen-mikroskopische Aufnahme bei einer Vergrößerung von beispielsweise 10 000fach oder 200 000fach hergestellt. In einer Fläche von 833,7 x 828,8 nm wird an 10 Mikrogel-Primärpartikeln der größte und der kleinste Durchmesser als d1 und d2 bestimmt. Liegt die oben definierte Abweichung bei mindestens 80 %, bevorzugter mindestens 90 %, noch bevorzugter mindestens 95% der vermessenen Mikrogel-Primärpartikeln jeweils unter 250 %, bevorzugter unter 100 %, noch bevorzugter weniger als 80 %, noch bevorzugter unter 50 %, so weisen die Mikrogel-Primärpartikeln das oben definierte Merkmal der Abweichung auf.

Liegt in der Zusammensetzung die Konzentration der Mikrogele so hoch, dass eine starke Überlagerung der sichtbaren Mikrogel-Primärpartikel erfolgt, kann die Auswertbarkeit durch vorheriges, geeignetes Verdünnen der Messprobe verbessert werden.

In der erfindungsgemäßen Zusammensetzung weisen die Primärpartikel des Mikrogels (B) bevorzugt einen durchschnittlichen Teilchendurchmesser von 5 bis 500 nm, bevorzugter von 20 bis 400 nm, bevorzugter von 20 bis 300 nm, bevorzugter von 20 bis 250 nm, noch bevorzugter 20 bis 99, noch bevorzugter 40 bis 80 nm auf (Durchmesserangaben nach DIN 53206). Die Herstellung besonders feinteiliger Mikrogele durch Emulsionspolymerisation erfolgt durch Steuerung der Reaktionsparameter in an sich bekannter Weise (s. z.B. H.G. Elias, Makromoleküle, Band 2, Technologie, 5. Auflage, 1992, Seite 99 ff).

Da sich die Morphologie der Mikrogele bei der Weiterverarbeitung der erfindungsgemäßen Zusammensetzung im wesentlichen nicht verändert, entspricht der durchschnittliche Teilchendurchmesser der dispergierten Primärpartikel im wesentlichen dem durchschnittlichen Teilchendurchmesser der dispergierten Primärpartikel, in den mit der erfindungsgemäßen Zusammensetzung erhaltenen Weiterverarbeitungsprodukten, wie Mikrogel-enthaltenden Kunststoffen, Schmierstoffen, Beschichtungen. Dies stellt einen besonderen Vorteil der erfindungsgemäßen Zusammensetzung dar. Den Abnehmern können gewissermaßen maßgeschneiderte flüssige, lagerstabile Mikrogelformulierungen zur Verfügung gestellt werden, die eine definierte Morphologie der Mikrogele aufweisen und die der Abnehmer leicht in den gewünschten Anwendungen weiterverarbeiten kann. Eine vorherige aufwändige Dispergierung, Homogenisierung oder gar Herstellung der Mikrogele ist nicht mehr erforderlich, weshalb zu erwarten ist, dass derartige Mikrogele auch Anwendung auf Gebieten finden werden, auf denen ihre Anwendung bisher als zu aufwändig erschien.

In der erfindungsgemäßen Zusammensetzung weisen die Mikrogele (B) zweckmäßig in Toluol bei 23°C unlösliche Anteile (Gelgehalt) von mindestens etwa 70 Gew.-%, bevorzugter mindestens etwa 80 Gew.-%, noch bevorzugter mindestens etwa 90 Gew.-% auf.

Der in Toluol unlösliche Anteil wird dabei in Toluol bei 23° bestimmt. Hierbei werden 250 mg des Mikrogels in 20 ml Toluol 24 Stunden unter Schütteln bei 23°C gequollen. Nach Zentrifugation mit 20.000 Upm wird der unlösliche Anteil abgetrennt und getrocknet. Der Gelgehalt ergibt sich aus dem Quotienten des getrockneten Rückstands und der Einwaage und wird in Gewichtsprozent angegeben.

In der erfindungsgemäßen Zusammensetzung weisen die Mikrogele (B) zweckmäßig in Toluol bei 23°C einen Quellungsindex von weniger als etwa 80, bevorzugter von weniger als 60 noch bevorzugter von weniger als 40 auf. So können die Quellungsindizes der Mikrogele (Qi) besonders bevorzugt zwischen 1 - 15 und 1-10 liegen. Der Quellungsindex wird aus dem Gewicht des in Toluol bei 23° für 24 Stunden gequollenen lösungsmittelhaltigen Mikrogels (nach Zentrifugation mit 20.000 Upm) und dem Gewicht des trockenen Mikrogels berechnet:

Qi = Naßgewicht des Mikrogels /Trockengewicht des Mikrogels.

Zur Ermittlung des Quellungsindex läßt man 250 mg des Mikrogels in 25 ml Toluol 24 h unter Schütteln quellen. Das Gel wird abzentrifugiert und gewogen und anschließend bei 70 °C bis zur Gewichtskonstanz getrocknet und nochmals gewogen.

In der erfindungsgemäßen Zusammensetzung weisen die Mikrogele (B) zweckmäßig Glastemperaturen Tg von -100°C bis +120°C, bevorzugter von -100°C bis +100°C, noch bevorzugter von -80°C bis +80 °C auf. In seltenen Fällen können auch Mikrogele verwendet werden, die aufgrund ihres hohen Vernetzungsgrades keine Glastemperatur aufweisen.

Weiterhin weisen die in der erfindungsgemäßen Zusammensetzung eingesetzten Mikrogele (B) bevorzugt eine Breite des Glasübergangs von größer als 5 °C, bevorzugt größer als 10°C, bevorzugter größer als 20 °C auf. Mikrogele, die eine solche Breite des Glasübergangs aufweisen, sind in der Regel - im Gegensatz zu vollständig homogen strahlenvernetzten Mikrogelen - nicht vollständig homogen vernetzt. Dies führt dazu, dass die Moduländerung von der Matrixphase zur dispergierten Phase in den aus den erfindungsgemäßen Zusammensetzungen beispielsweise hergestellten Mikrogel-enthaltenden Kunststoff-Zusammensetzungen nicht unmittelbar ist. Hierdurch kommt es bei schlagartiger Beanspruchung dieser Zusammensetzungen nicht zu Abreißeffekten zwischen Matrix und dispergierter Phase, wodurch die mechanischen Eigenschaften, das Quellverhalten und die Spannungsrisskorrosion vorteilhaft beeinflusst werden.

Die Bestimmung der Glasübergangstemperaturen (Tg) und der Breite des Glasübergangs (ΔTg) der Mikrogele erfolgt durch Differentialthermoanalyse (DTA, engl. Differential-Scanning-Calorimetry (DSC)) unter folgenden Bedingungen: Für die Bestimmung von Tg und ΔTg werden zwei Abkühl-/Aufheizzyklen durchgeführt. Tg und ΔTg werden im zweiten Aufheizzyklus bestimmt. Für die Bestimmungen werden 10 - 12 mg des ausgewählten Mikrogels in einem DSC-Probenbehälter (Standard-Aluminium-Pfanne) von Perkin-Elmer eingesetzt. Der erste DSC-Zyklus wird durchgeführt, indem die Probe zuerst mit flüssigem Stickstoff auf -100°C abgekühlt und dann mit einer Geschwindigkeit von 20K/min auf +150°C aufgeheizt wird. Der zweite DSC-Zyklus wird durch sofortige Abkühlung der Probe begonnen, sobald eine Probentemperatur von +150°C erreicht ist. Die Abkühlung erfolgt mit einer Geschwindigkeit von ungefähr 320 K/min. Im zweiten Aufheizzyklus wird die Probe wie im ersten Zyklus noch einmal auf +150°C aufgeheizt. Die Aufheizgeschwindigkeit im zweiten Zyklus ist erneut 20K/min. Tg und ΔTg werden graphisch an der DSC-Kurve des zweiten Aufheizvorgangs bestimmt. Für diesen Zweck werden an die DSC-Kurve drei Geraden angelegt. Die 1. Gerade wird am Kurventeil der DSC-Kurve unterhalb Tg, die 2. Gerade an dem durch Tg verlaufenden Kurvenast mit Wendepunkt und die 3. Gerade an dem Kurvenast der DSC-Kurve oberhalb Tg angelegt. Auf diese Weise werden drei Geraden mit zwei Schnittpunkten erhalten. Beide Schnittpunkte sind jeweils durch eine charakteristische Temperatur gekennzeichnet. Die Glastemperatur Tg erhält man als Mittelwert dieser beiden Temperaturen und die Breite des Glasübergangs ΔTg erhält man aus der Differenz der beiden Temperaturen.

Die in der erfindungsgemäßen Zusammensetzung enthaltenen, bevorzugt nicht durch energiereiche Strahlen vernetzten Mikrogele können an sich in bekannter Weise hergestellt werden (s. zum Beispiel EP-A- 405 216, EP-A-854171, DE-A 4220563, GB-PS 1078400, DE 197 01 489.5, DE 197 01 488.7, DE 198 34 804.5, DE 198 34 803.7, DE 198 34 802.9, DE 199 29 347.3, DE 199 39 865.8, DE 199 42 620.1, DE 199 42 614.7, DE 100 21 070.8, DE 100 38 488.9, DE 100 39 749.2, DE 100 52 287.4, DE 100 56 311.2 und DE 100 61 174.5). In den Patent(anmeldungen) EP-A 405 216, DE-A 4220563 sowie in GB-PS 1078400 wird die Verwendung von CR-, BR- und NBR-Mikrogelen in Mischungen mit doppelbindungshaltigen Kautschuken beansprucht. In DE 197 01 489.5 wird die Verwendung von nachträglich modifizierten Mikrogelen in Mischungen mit doppelbindungshaltigen Kautschuken wie NR, SBR und BR beschrieben.

Unter Mikrogelen werden zweckmäßig Kautschukpartikel verstanden, die insbesondere durch Vernetzung folgender Kautschuke erhalten werden:

| | |
|---|---|
| BR: | Polybutadien, |
| ABR: | Butadien/Acrylsäure-C1-4Alkylestercopolymere, |
| IR: | Polyisopren, |
| SBR: | Styrol-Butadien-Copolymerisate mit Styrolgehalten von 1-60, vorzugsweise 5-50 Gewichtsprozent, |
| X-SBR: | carboxylierte Styrol-Butadien-Copolymerisate |
| FKM: | Fluorkautschuk, |
| ACM: | Acrylatkautschuk, |
| NBR: | Polybutadien-Acrylnitril-Copolymerisate mit Acrylnitrilgehalten von 5-60, vorzugsweise 10-50 Gewichtsprozent, |
| X-NBR: | carboxlierte Nitrilkautschuke |
| CR: | Polychloropren |
| IIR: | Isobutylen/Isopren-Copolymerisate mit Isoprengehalten von 0,5-10 Gewichtsprozent, |
| BIIR: | bromierte Isobutylen/Isopren-Copolymerisate mit Bromgehalten von 0,1-10 Gewichtsprozent, |
| CIIR: | chlorierte Isobutylen/Isopren-Copolymerisate mit Bromgehalten von 0,1-10 Gewichtsprozent, |
| HNBR: | teil- und vollhydrierte Nitrilkautschuke |
| EPDM: | Ethylen-Propylen-Dien-Copolymerisate, |
| EAM: | Ethylen/Acrylatcopolymere, |
| EVM: | Ethylen/Vinylacetatcopolymere |
| CO und ECO: | Epichlorhydrinkautschuke, |
| Q: | Silikonkautschuke, mit Ausnahme von Silikon-Propfpolymerisaten, |

(fortgesetzt)

AU:          Polyesterurethanpolymerisate,

EU:          Polyetherurethanpolymerisate

ENR:         Epoxydierter Naturkautschuk oder Mischungen davon.

In der erfindungsgemäßen Zusammensetzung sind die verwendeten Mikrogele (B) solche, die durch Emulsionspolymerisation und Vernetzung erhältlich sind.

Bei der Herstellung der erfindungsgemäß verwendeten Mikrogele durch Emulsionspolymerisation werden beispielsweise folgende, radikalisch polymerisierbare Monomere eingesetzt: Butadien, Styrol, Acrylnitril, Isopren, Ester der Acryl- und Methacrylsäure. Tetrafluorethylen, Vinylidenfluord, Hexafluorpropen, 2-Chlorbutadien, 2,3-Dichlorbutadien sowie doppelbindungshaltige Carbonsäuren wie z. B. Acrylsäure, Methacrylsäure, Maleinsäure, Itakonsäure, doppelbindungshaltige Hydroxyverbindungen wie z. B. Hydroxyethylmethacrylat, Hydroxyethylacrylat, Hydroxybutylmethacrylat, Aminfunktionalisierte (Meth)acrylate, Acrolein, N-Vinyl-2-pyrollidon, N-Allyl-Harnstoff und N-Allyl-Thioharnstoff sowie sekundäre Amino-(meth)-acrylsäureester wie 2-tert-Butylaminoethylmethacrylat und 2-tert-Butylaminoethylmethacrylamid. Die Vernetzung des Kautschukgels kann direkt während der Emulsionspolymerisation, wie durch Copolymerisation mit vernetzend wirkenden multifunktionellen Verbindungen oder durch anschließende Vernetzung wie untenstehend beschrieben erreicht werden. Die direkte Vernetzung stellt eine bevorzugte Ausführungsform der Erfindung dar. Bevorzugte multifunktionelle Comonomere sind Verbindungen mit mindestens zwei, vorzugsweise 2 bis 4 copolymerisierbaren C=C-Doppelbindungen, wie Diisopropenylbenzol, Divinylbenzol, Divinylether, Divinylsulfon, Diallylphthalat, Triallylcyanurat, Triallylisocyanurat, 1,2-Polybutadien, N,N'-m-Phenylenmaleimid, 2,4-Toluylenbis(maleimid) und/oder Triallyltrimellitat. Darüber hinaus kommen in Betracht die Acrylate und Methacrylate von mehrwertigen, vorzugsweise 2- bis 4-wertigen C2 bis C10 Alkoholen, wie Ethylenglykol, Propandiol-1,2, Butandiol, Hexandiol, Polyethylenglykol mit 2 bis 20, vorzugsweise 2 bis 8 Oxyethyleneinheiten, Neopentylglykol, Bisphenol-A, Glycerin, Trimethylolpropan, Pentaerythrit, Sorbit mit ungesättigten Polyestern aus aliphatischen Di- und Polyolen sowie Maleinsäure, Fumarsäure, und/oder Itaconsäure.

Die Vernetzung zu Kautschuk-Mikrogelen während der Emulsionspolymerisation kann auch durch Fortführung der Polymerisation bis zu hohen Umsätzen oder im Monomerzulaufverfahren durch Polymerisation mit hohen internen Umsätzen erfolgen. Eine andere Möglichkeit besteht auch in der Durchführung der Emulsionspolymerisation in Abwesenheit von Reglern.

Für die Vernetzung der unvernetzten oder der schwach vernetzten Mikrogel-Ausgangsprodukte im Anschluß an die Emulsionspolymerisation setzt man am besten die Latices ein, die bei der Emulsionspolymerisation erhalten werden.

Geeignete, vernetzend wirkende Chemikalien sind beispielsweise organische Peroxide, wie Dicumylperoxid, t-Butylcumylperoxid, Bis-(t-butyl-peroxy-isopropyl)benzol, Di-t-butylperoxid, 2,5-Ditmethylhexan-2,5-dihydroperoxid, 2,5-Dimethylhexin-3,2,5-dihydroper-oxid, Dibenzoyl-peroxid, Bis-(2,4-dichlorobenzoyl)peroxid, t-Butylperbenzoat sowie organische Azoverbindungen, wie Azo-bis-isobutyronitril und Azo-bis-cyclohexannitril sowie Di- und Polymercaptoverbindungen, wie Dimercaptoethan, 1,6-Dimercaptohexan, 1,3,5-Trimercaptotriazin und Mercapto-terminierte Polysulfidkautschuke wie Mercapto-terminierte Umsetzungsprodukte von Bis-Chlorethylformal mit Natriumpolysulfid.

Die optimale Temperatur zur Durchführung der Nachvemetzung ist naturgemäß von der Reaktivität des Vernetzers abhängig und kann bei Temperaturen von Raumtemperatur bis ca. 180 °C gegebenenfalls unter erhöhtem Druck durchgeführt werden (siehe hierzu Houben-Weyl, Methoden der organischen Chemie, 4. Auflage, Band 14/2, Seite 848). Besonders bevorzugte Vernetzungsmittel sind Peroxide.

Die Vernetzung C=C-Doppelbindungen enthaltender Kautschuke zu Mikrogelen kann auch in Dispersion bzw. Emulsion bei gleichzeitiger, partieller, ggf. vollständiger, Hydrierung der C=C- Doppelbindung durch Hydrazin wie in US 5,302,696 oder US 5,442,009 beschrieben oder ggf. andere Hydrierungsmitteln, beispielsweise Organometallhydridkomplexe erfolgen.

Vor, während oder nach der Nachvernetzung kann ggf. eine Teilchenvergrößerung durch Agglomeration durchgeführt werden.

Bei dem erfindungsgemäß bevorzugt verwendeten Herstellungsverfahren ohne Anwendung energiereicher Strahlung werden stets nicht vollständig homogen vernetzte Mikrogele erhalten, die die oben beschriebenen Vorteile aufweisen können.

Als Mikrogele zur Herstellung der erfindungsgemäßen Zusammensetzung können sowohl nicht-modifizierte Mikrogele, die im wesentlichen keine reaktiven Gruppen insbesondere an der Oberfläche aufweisen als auch, modifizierte, mit funktionellen Gruppen, insbesondere an der Oberfläche modifizierte Mikrogele verwendet werden. Letztere können durch chemische Umsetzung der bereits vernetzten Mikrogele mit gegenüber C=C-Doppelbindungen reaktiven Chemikalien hergestellt werden. Diese reaktiven Chemikalien sind insbesondere solche Verbindungen, mit deren Hilfe polare Gruppen wie z. B. Aldehyd-, Hydroxyl-, Carboxyl-, Nitril- sowie schwefelhaltige Gruppen, wie z. B. Mercapto-, Dithiocarbamat-, Polysulfid-, Xanthogenat-, Thiobenzthiazol- und/oder Dithiophosphorsäuregruppen und/oder ungesättigte Dicarbonsäuregruppen an die Mikrogele chemisch gebunden werden können. Dies trifft auch auf N,N'-m-Phenylendiamin zu. Ziel der Mikrogelmodifizierung ist die Verbesserung der Mikrogelverträglichkeit, wenn die erfindungsgemäße Zusammensetzung zur Herstellung der späteren Matrix, in die das Mikrogel eingearbeitet ist, oder die erfindungsgemäße Zusammensetzung zur Einarbeitung in eine Matrix verwendet wird, um eine gute Verteilbarkeit bei der Herstellung sowie eine gute Ankopplung zu erreichen.

Besonders bevorzugte Methoden der Modifizierung sind die Pfropfung der Mikrogele mit funktionellen Monomeren sowie die Umsetzung mit niedermolekularen Agentien.

Für die Pfropfung der Mikrogele mit funktionellen Monomeren geht man zweckmäßigerweise von der wässrigen Mikrogeldispersion aus, die man mit polaren Monomeren wie Acrylsäure, Methacrylsäure, Itakonsäure, Hydroxyethyl-(meth)-acrylat, Hydroxypropyl-(meth)-acrylat, Hydroxybutyl-(meth)-acrylat, Acrylamid, Methacrylamid, Acrylnitril, Acrolein, N-Vinyl-2-pyrollidon, N-Allyl-Harnstoff und N-Allyl-Thioharnstoff sowie sekundären Amino-(meth)-acrylsäureester wie 2-tert-Butylaminoethylmethacrylat und 2-tert-Butylaminoethylmethacrylamid unter den Bedingungen einer radikalischen Emulsionspolymerisation umsetzt. Auf diese Weise werden Mikrogele mit einer Kern/Schale-Morphologie erhalten, wobei die Schale eine hohe Verträglichkeit mit der Matrix aufweisen soll. Es ist wünschenswert, daß das im Modifikationsschritt verwendete Monomer möglichst quantitativ auf das unmodifizierte Mikrogel aufpfropft. Zweckmäßigerweise werden die funktionellen Monomere vor der vollständigen Vernetzung der Mikrogele hinzudosiert.

Prinzipiell denkbar ist auch eine Pfropfung der Mikrogele in nichtwässrigen Systemen, wobei auf diese Weise auch eine Modifikation mit Monomeren durch ionische Polymerisationsmethoden möglich wird.

Für eine Oberflächenmodifikation der Mikrogele mit niedermolekularen Agentien kommen insbesondere folgende Reagentien in Frage: elementarer Schwefel, Schwefelwasserstoff und/oder Alkylpolymercaptanen, wie 1,2-Dimercaptoethan oder 1,6-Dimercaptohexan, desweiteren Dialkyl- und Dialkylaryldithiocarbamat, wie den Alkalisalzen von Dimethyldithiocarbamat und/oder Dibenzyldithiocarbamat, ferner Alkyl- und Arylxanthogenaten, wie Kaliumethylxanthogenat und Natrium-isopropylxanthogenat sowie die Umsetzung mit den Alkali- oder Erdalkalisalzen der Dibutyldithiophosphorsäure und Dioctyldithiophosphorsäure sowie Dodecyldithiophosphorsäure. Die genannten Reaktionen können vorteilhafterweise auch in Gegenwart von Schwefel durchgeführt werden, wobei der Schwefel unter Bildung polysulfidischer Bindungen mit eingebaut wird. Zur Addition dieser Verbindung können Radikalstarter wie organische und anorganische Peroxide und/oder Azoinitiatoren, zugesetzt werden.

Auch eine Modifikation doppelbindungshaltiger Mikrogele wie z. B. durch Ozonolyse sowie durch Halogenierung mit Chlor, Brom und Jod kommen infrage. Auch eine weitere Umsetzung modifizierter Mikrogele wie z. B. die Herstellung hydroxylgruppenmodifizierter Mikrogele aus epoxydierten Mikrogelen wird als chemische Modifikation von Mikrogelen verstanden.

In einer bevorzugten Ausführungsform sind die Mikrogele durch HydroxylGruppen insbesondere auch an der Oberfläche davon modifiziert. Der Hydroxylgruppengehalt der Mikrogele wird durch Umsetzung mit Acetanydrid und Titration der hierbei frei werdenden Essigsäure mit KOH nach DIN 53240 als Hydroxyl-Zahl mit der Dimension mg KOH/g Polymer bestimmt. Die Hydroxylzahl der Mikrogele liegt bevorzugt zwischen 0,1-100, noch bevorzugter zwischen 0,5-50 mg KOH/g Polymer.

Die Menge des eingesetzten Modifizierungsmittels richtet sich nach dessen Wirksamkeit und den im Einzelfall gestellten Anforderungen und liegt im Bereich von 0,05 bis 30 Gewichtsprozent, bezogen auf die Gesamtmenge an eingesetztem Kautschuk-Mikrogel, besonders bevorzugt sind 0,5-10 Gewichtsprozent bezogen auf Gesamtmenge an Kautschukgel.

Die Modifizierungsreaktionen können bei Temperaturen von 0-180 °C, bevorzugt 20-95 °C, ggf. unter Druck von 1-30 bar, durchgeführt werden. Die Modifizierungen können an Kautschuk-Mikrogelen in Substanz oder in Form ihrer Dispersion vorgenommen werden, wobei beim letzten Fall inerte organische Lösungsmittel oder auch Wasser als Reaktionsmedium verwendet werden können. Besonders bevorzugt wird die Modifizierung in wäßriger Dispersion des vernetzten Kautschuks durchgeführt.

Die Verwendung von unmodifizierten Mikrogelen ist insbesondere bei erfindungsgemäßen Zusammensetzungen bevorzugt, die zur Einarbeitung in unpolare Kautschuke oder unpolare thermoplastische Werkstoffen verwendet werden, wie zum Beispiel Polypropylen, Polyethylen und Blockcopolymeren auf Basis von Styrol, Butadien, Isopren (SBR, SIR) und hydrierten Isopren-Styrol-Blockcopolymeren (SEBS), und üblichen TPE-Os und TPE-Vs.

Die Verwendung von modifizierten Mikrogelen ist insbesondere bei erfindungsgemäßen Zusammensetzungen bevorzugt, die zur Einarbeitung in polare Kautschuke oder polare thermoplastische Werkstoffe (A) verwendet werden, wie zum Beispiel PA, TPE-A, PU, TPE-U, PC, PET, PBT, POM, PMMA, PVC, ABS , PTFE, PVDF.

Der mittlere Durchmesser der hergestellten Mikrogele kann mit hoher Genauigkeit beispielsweise auf 0,1 Mikrometer (100 nm) $\pm$ 0,01 Mikrometer (10 nm) eingestellt werden, so dass beispielsweise eine Teilchengrößenverteilung erreicht wird, bei der mindestens 75 % aller Mikrogel-Partikel zwischen 0,095 Mikrometer und 0,105 Mikrometer groß sind. Andere mittlere Durchmesser der Mikrogele insbesondere im Bereich zwischen 5 bis 500 nm lassen sich mit gleicher Genauigkeit (mindestens Gew.-75 % aller Teilchen liegen um das Maximum der integrierten Korngrößenverteilungskurve (bestimmt durch Lichtstreuung) in einem Bereich von $\pm$ 10 % oberhalb und unterhalb des Maximums) herstellen und einsetzen. Dadurch kann die Morphologie der in der erfindungsgemäßen Zusammensetzung dispergierten Mikrogele praktisch "punktgenau" eingestellt und damit die Eigenschaften der erfindungsgemäßen Zusammensetzung sowie der daraus beispielsweise hergestellten Kunststoffe eingestellt werden.

Die Aufarbeitung der so hergestellten Mikrogele vorzugsweise auf Basis von BR, SBR, NBR, SNBR, oder Acrylnitril oder ABR kann beispielsweise durch Eindampfen, Koagulation, durch Cokoagulation mit einem weiteren Latexpolymer, durch Gefrierkoagulation (vgl. US-PS 2187146) oder durch Sprühtrocknung erfolgen. Bei der Aufarbeitung durch Sprühtrocknung können handelsübliche auch Fließhilfen wie beispielsweise $CaCO_3$ oder Kieselsäure zugesetzt werden.

In einer bevorzugten Ausführungsform der erfindungsgemäßen Zusammensetzung basiert das Mikrogel (B) auf Kautschuk.

In einer bevorzugten Ausführungsform der erfindungsgemäßen Zusammensetzung ist das Mikrogel (B) durch funktionelle, gegenüber C=C-Doppelbindungen reaktive Gruppen modifiziert.

In einer bevorzugten Ausführungsform weist das Mikrogel (B) einen Quellungsindex in Toluol bei 23 °C von 1 bis 15 auf.

Die erfindungsgemäße Zusammensetzung weist bevorzugt eine Viskosität von 2 mPas bis zu 50000000 mPas, bevorzugter 50 mPas bis zu 3000000 mPas bei einer Drehzahl von 5 s$^{-1}$, mit einem Kegelplattenviskosimeter nach DIN 53018 gemessen, bei 20°C auf.

Organisches nicht-vernetzbares Medium (A)

Die erfindungsgemäße Zusammensetzung enthält mindestens ein organisches Medium (A), welches bei einer Temperatur von 120°C eine Viskosität von weniger als 30000 mPas, bevorzugter von weniger als 1000 mPas, bevorzugter von weniger als 200 mPas, bevorzugter von weniger als 100 mPas, noch bevorzugter weniger als 20 mPas bei 120°C aufweist.

Ein solches Medium ist bei Raumtemperatur (20°C) flüssig bis fest, bevorzugt flüssig bzw. fließfähig.

Organisches Medium im Sinne der Erfindung bedeutet, dass das Medium mindestens ein Kohlenstoffatom enthält.

Unter nicht-vernetzbaren Medien im Sinne der Erfindung werden insbesondere solche Medien verstanden, die keine über Heteroatome-enthaltende funktionelle Gruppen oder C=C-Gruppen vernetzbare Gruppen enthalten, wie insbesondere übliche Monomere oder Prepolymere, die in üblicher Weise radikalisch, mit UV-Strahlen, thermisch und/oder durch Polyaddition bzw. Polykondensation unter Zusatz von Vernetzungsmitteln (z. B. Polyisocyanate, Polyamine, Säureanhydride) unter Bildung von Oligomeren oder Polymeren in üblicher Weise vernetzt bzw. polymerisiert werden. Erfindungsgemäß können als organische, nicht-vernetzbare Medien auch solche Medien verwendet werden, die zwar beispielsweise gewisse Anteile an ungesättigten Bindungen (gewisse Polyesteröle, Rapsöl) oder Hydroxygruppen (Polyether) enthalten, die jedoch nicht zu Oligomeren oder Polymeren in üblicher Weise vernetzt bzw. polymerisiert werden. Nicht-vernetzbaren Medien sind insbesondere auch Lösemittel, insbesondere solche nach DIN 55 945.

Bevorzugt handelt es sich bei dem nicht vernetzbaren Medium (A) um bei Raumtemperatur (20°C) flüssige, nicht vernetzbaren Medien, insbesondere um Kohlenwasserstoffe (geradkettige, verzweigte, cyclische, gesättigte, ungesättigte und/oder aromatische Kohlenwasserstoffe mit 1 bis 200 Kohlenstoffatomen, die gegebenenfalls durch ein oder mehrere Substituenten ausgewählt aus Halogenen, wie Chlor, Fluor, Hydroxy, Oxo, Amino, Carboxy, Carbonyl, Aceto, Amido substituiert sein können), synthetische Kohlenwasserstoffe, Polyetheröle, Esteröle, Phosphorsäureester, Siliciumhaltige Öle und Halogenkohlenwasserstoffe bzw. Halogenkohlenstoffe (s. z. B. Ullmanns Enzyklopädie der technischen Chemie, Verlag Chemie Weinheim, Band 20, (1981) 457 ff, 504, 507ff, 517/518, 524). Diese nicht vernetzbaren Medien (A) zeichnen sich insbesondere durch Viskositäten von 2 bis 1500 mm$^2$/s (cSt) bei 40°C aus. Bevorzugt handelt es sich bei dem nicht vernetzbaren Medium (A) um bei Raumtemperatur (20°C) flüssige, nicht vernetzbaren Medien, insbesondere um Lösemittel nach DIN 55 945 wie Xylol, Solvent Naphtha, Methylethylketon, Methoxypropylacetat, N-Methylpyrrolidon, Dimethylsulfoxid.

Die synthetischen Kohlenwasserstoffe werden gewonnen durch Polymerisation von Olefinen, Kondensation von Olefinen oder Chlorparaffinen mit Aromaten oder dechlorierende Kondensation von Chlorparaffinen. Beispiele sind für die Polymerisatöle die Ethylen-Polymere, die Propylen-Polymere, die Polybutene, die Polymere höherer Olefine, die Alkylaromaten. Die Ethylen-Polymere haben Molekulargewichte zwischen 400 und 2000 g/mol. Die Polybutene besitzen Molekulargewichte zwischen 300 und 1500 g/mol.

Bei den Polyetherölen unterscheidet man aliphatische Polyetheröle, Polyalkylenglykole, insbesondere Polyethylen- und Polypropylenglykole, deren Mischpolymerisate, ihre Mono- und Diether sowie Esterether und Diester, Tetrahydrofuran-Polymeröle, Perfluorpolyalkylether und Polyphenylether. Perfluorpolyalkylether haben Molmassen von 1000 - 10000 g/Mol. Die aliphatischen Polyetheröle weisen Viskositäten von 8 bis 19 500 mm$^2$/s bei 38°C auf.

Polyphenylether werden durch Kondensation von Alkaliphenolaten mit Halogenbenzolen hergestellt. Auch der Diphenylether und seine Alkylderivate finden Anwendung.

Beispiele für die Esteröle sind die Alkylester der Adipinsäure, das Bis-(2-ethylhexyl)-sebacat und das Bis-(3,5,5-trimethylhexyl)-sebacat oder-adipat sowie die Ester natürlicher Fettsäuren mit mono- oder polyfunktionellen Alkoholen, wie TMP-Oleat. Eine weitere Klasse bildet die fluorhaltigen Esteröle. Bei Phosphorsäureestern unterscheidet man Triaryl-, Trialkyl- und Alkylarylphosphate. Beispiele sind Tri-(2-ethylhexyl)-phosphat und Bis-(2-ethylhexyl)-phenyl-phosphat.

Siliciumhaltige Öle sind die Silikonöle (Polymere der Alkyl- und Arylsiloxanreihe) und die Kieselsäureester.

Beispiele für nachwachsende nicht-vernetzbare organische Medien sind Rapsöl, Sonnenblumenöl.

Zu den Halogenkohlenwasserstoffen bzw. Halogenkohlenstoffen gehören chlorierte Paraffine, wie Chlortrifluorethylenpolymeröle und Hexafluorbenzol.

(Nicht-reaktive) Lösemittel nach DIN 55 945 sind Hexan, Siedegrenzbenzine, Testbenzine, Xylol, Solvent Naphtha, Balsamterpentinöl, Methylethylketon, Methylisobutylketon, Methylamylketon, Isophoron, Butylacetat, 1-Methoxypropylacetat, Butylglykolacetat, Ethyldiglykolacetat und N-Methylpyrrolidon (Brock, Thomas, Groteklaes, Michael, Mischke, Peter, Lehrbuch der Lacktechnologie, Curt R. Vincentz Verlag Hannover, (1998) 93ff).

Besonders bevorzugte nicht-vernetzbare Medien schließen ein: Polyether, z. B. Baylube 68CL, naphthenische Öle, z. B. Nynas T 110, paraffinische, hochraffinierte Mineralöle, z. B. Shell Catenex S 932, Esteröle, z. B. Methylester SU, Öle auf Basis nachwachsender Rohstoffe, z. B. raffiniertes Rüböl. Besonders bevorzugte nicht vernetzbare Medien (A) sind die große Klasse der Kohlenwasserstoffe, die Polyetheröle, und die Lösemittel nach DIN 55 945.

Die erfindungsgemäße Zusammensetzung enthält 2 bis 90 Gew.-%, bevorzugter 2 - 30 Gew.-% des Mikrogels (B), bezogen auf die Gesamtmenge der Zusammensetzung.

Die erfindungsgemäße Zusammensetzung enthält weiterhin bevorzugt 10 bis 99,5 Gew.-%, bevorzugter 40 bis 97 Gew.-%, noch bevorzugter 50 bis 95 Gew.-%, weiterhin bevorzugter 60 bis 95 Gew.-% des organischen Mediums (A)).

Die erfindungsgemäße Zusammensetzung besteht bevorzugt aus dem organischen nicht vernetzbaren Medium (A) und dem Mikrogel (B) und gegebenenfalls den unten stehenden weiteren Komponenten. Die Anwesenheit von Wasser ist nicht bevorzugt, bevorzugt enthalten die erfindungsgemäßen Zusammensetzungen weniger als 0,8 Gew.-%, noch bevorzugter weniger als 0,5 Gew.-% Wasser. Am meisten bevorzugt ist die Anwesenheit von Wasser ausgeschlossen (< 0,1 Gew.-%). Letzteres ist herstellungsbedingt im allgemeinen bei den erfindungsgemäßen Zusammensetzungen der Fall.

Die erfindungsgemäße Zusammensetzung kann zusätzlich Füllstoffe, Pigmente und Additive wie Dispergierhilfsmittel, Entlüfter, Fließmittel, Verlaufsmittel, Hilfsmittel zur Untergrundbenetzung, Haftverbesserer, AntiAbsetzmittel, Hilfsmittel zur Steuerung der Untergrundbenetzung, zur Steuerung der Leitfähigkeit, Hilfsmittel zur Steuerung der Farbtonstabilität, des Glanzes und des Ausschwimmens, Oxidationsinhibitoren, Stockpunktserniedriger, Hochdruckzusätze, Schaumverhütungsmittel, Demulgatoren, Verschleißschutzadditive, Korrosionschutzadditive, Buntmetalldesaktivatoren, Reibwertmodifizierungsmittel enthalten.

Dabei lassen sich insbesondere die genannten Additive besonders gleichmäßig in die erfindungsgemäßen Zusammensetzungen einarbeiten, was wiederum zur Verbesserung der daraus hergestellten Produkte, wie Polymerzusammensetzungen, Schmierstoffe führt.

Besonders geeignete Pigmente und Füllstoffe zur Herstellung der erfindungsgemäßen Zusammensetzungen, die das nicht-vernetzbare Medium (A) enthalten, und daraus hergestellter Mikrogel-enthaltende Kunststoffe sind beispielsweise: anorganische und organische Pigmente, silikatische Füllstoffe wie Kaolin, Talkum, Carbonate wie Calciumcarbonat und Dolomit, Bariumsulfat,

Metalloxide, wie Zinkoxid, Calciumoxid, Magnesiumoxid, Aluminiumoxid, hochdisperse Kieselsäuren (gefällte und thermisch hergestellte Kieselsäuren), Metallhydroxide, wie Aluminiumhydroxid und Magnesiumhydroxid, Glasfasern und Glasfaserprodukte (Latten, Stränge oder Mikroglaskugeln), Kohlenstofffasern, Thermoplastfasern (Polyamid, Polyester, Aramid), Kautschukgele auf Basis Polychloropren und/oder Polybutadien oder auch aller anderer vorher beschriebener Gelpartikel, die einen hohen Vernetzungsgrad besitzen und Teilchengröße 5 bis 1000 nm.

Die genannten Füllstoffe können alleine oder im Gemisch eingesetzt werden. In einer besonders bevorzugten Ausführung des Verfahrens werden 0,5 - 30 Gewichtsteile Kautschukgel (B), gegebenenfalls zusammen mit 0,1 bis 40 Gewichtsteilen Füllstoffen, und 30 - 99,5 Gewichtsteile des flüssigen nicht-vernetzbaren Mediums (A) zur Herstellung der erfindungsgemäßen Zusammensetzungen eingesetzt.

Die erfindungsgemäßen Zusammensetzungen können weitere Hilfsmittel enthalten wie Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Wachse, Streckmittel, organische Säuren, sowie Füllstoffaktivatoren, wie beispielsweise Trimethoxysilan, Polyethylenglykol, oder andere, die in den beschriebenen Industrien bekannt sind.

Die Hilfsmittel werden in üblichen Mengen, die sich u.a. nach dem Verwendungszweck richten, eingesetzt. Übliche Mengen sind z. B. Mengen von 0,1 bis 50 Gew.-%, bezogen auf eingesetzte Mengen an flüssigem Medium (A) bzw. an eingesetztem Kautschukgel (B).

In einer bevorzugten Ausführungsform wird die erfindungsgemäße Zusammensetzung durch Mischen von mindestens einem nicht-vernetzbaren, organischen Medium (A), welches bei einer Temperatur von 120°C eine Viskosität von weniger als 30000 mPas aufweist, und mindestens einem trockenen Mikrogelpulver (B) (bevorzugt weniger als 1 Gew.-%, noch bevorzugter weniger als 0,5 Gew.-% flüchtige Anteile (beim Mischen der Komponente (A) und (B) werden keine Mikrogel-Latices verwendet)), das nicht durch energiereiche Strahlen vernetzt ist, mittels eines Homogenisators, einer Perlmühle, einer Dreiwalze, einer Ein- oder Mehrwellen-Extruderschnecke, eines Kneters und/ oder eines Dissolvers, bevorzugt mittels eines Homogenisators, einer Perlmühle oder einer Dreiwalze hergestellt.

Hinsichtlich der Viskosität der herzustellenden Zusammensetzung ist der Kneter, im welchem bevorzugt nur sehr hochviskose (fast feste bis feste) Zusammensetzungen eingesetzt werden können, am eingeschränktesten, d. h. er ist nur in Sonderfällen anwendbar.

Nachteilig an der Perlmühle ist der vergleichsweise eingeschränkte Viskositätsbereich (tendenziell dünne Zusammensetzungen), hohe Reinigungsaufwand, teure Produktwechsel der verwendbaren Zusammensetzungen sowie der Abrieb von Kugeln und Mahlapparatur.

Besonders bevorzugt erfolgt die Homogenisierung der erfindungsgemäßen Zusammensetzungen mittels eines Homogenisators oder einer Dreiwalze. Nachteilig an der Dreiwalze ist der vergleichsweise eingeschränkte Viskositätsbereich (tendenziell sehr dicke Zusammensetzungen), geringer Durchsatz und die nicht geschlossene Arbeitsweise (schlechter Arbeitsschutz). Sehr bevorzugt erfolgt die Homogenisierung der erfindungsgemäßen Zusammensetzungen daher mittels eines Homogenisators. Der Homogenisator erlaubt es dünne und dicke Zusammensetzungen bei hohem Durchsatz zu verarbeiten (hohe Flexibilität). Produktwechsel sind vergleichsweise schnell und problemlos möglich.

Überraschend und neu ist, dass die Mikrogele (B) in nicht vemetzbaren organischen Medien dispergiert werden können; insbesonders überraschend ist die bis zu den Primärpartikeln gelungene Dispergierung (s. Beispiele).

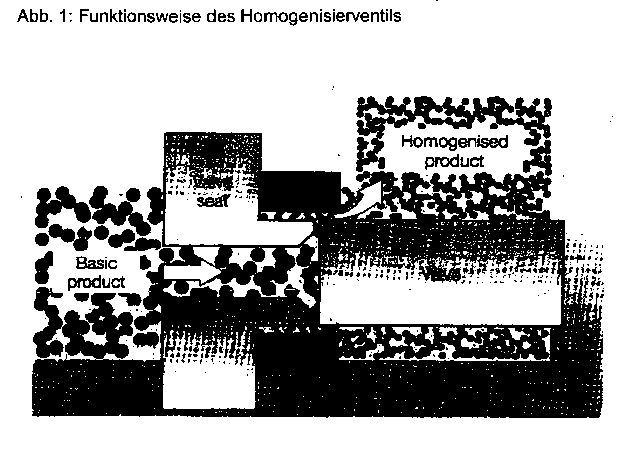

Die Dispergierung der Mikrogele (B) im flüssigen Medium (A) erfolgt im Homogenisator im Homogenisierventil (s. Abb. 1).

Bei dem erfindungsgemäß bevorzugt eingesetzten Verfahren werden Agglomerate in Aggregate und/oder Primärpartikel zerteilt. Agglomerate sind physikalisch trennbare Einheiten, bei deren Dispergierung keine Änderung der Primärpartikelgröße erfolgt.

Abb. 1 zeigt die Funktionsweise des Homogenisierventils.
(Darin bedeuten:

Basic product: Ausgangsprodukt,
Valve seat: Ventilsitz
Valve: Ventil
Homogenised product: Homogenisiertes Produkt).

Das zu homogenisierende Produkt tritt in das Homogenisierventil mit langsamer Geschwindigkeit ein und wird im Homogenisierspalt auf hohe Geschwindigkeiten beschleunigt. Die Dispergierung erfolgt hinter dem Spalt hauptsächlich aufgrund von Turbulenzen und Kavitation (William D. Pandolfe, Peder Baekgaard, Marketing Bulletin der Fa. APV Homogeniser Group - "Highpressure homogenisers processes, product and applications").

Die Temperatur der erfindungsgemäßen Zusammensetzung beträgt bei Aufgabe in den Homogenisator zweckmäßig -40 - 140°C, vorzugsweise 20 - 80 °C.

Die zu homogenisierende erfindungsgemäßen Zusammensetzung wird zweckmäßig bei einem Druck von 20 bis 4000 bar, bevorzugt 100 bis 4000 bar, bevorzugt 200 bis 4000 bar, bevorzugt 200 - 2000 bar, sehr bevorzugt 500 - 1500 bar im Gerät homogenisiert. Die Anzahl der Durchläufe richtet sich nach der Güte gewünschten Dispergiergüte und kann zwischen einem und 20, bevorzugt einem bis 10, bevorzugter einem bis vier Durchgängen variieren.

Die erfindungsgemäß hergestellten Zusammensetzungen besitzen eine besonders feine Partikelverteilung, die besonders mit dem Homogenisator erreicht wird, der auch hinsichtlich der Flexibilität des Verfahrens bezüglich variierender Viskositäten der flüssigen Medien und der resultierenden Zusammensetzungen und notwendigen Temperaturen sowie der Dispergiergüte äußerst vorteilhaft ist.

Die Erfindung betrifft weiterhin die Verwendung der erfindungsgemäßen Zusammensetzung zur Herstellung von Mikrogel-enthaltenden Polymeren bzw. Kunststoffen, wie vorstehend erläutert.

Werden die erfindungsgemäßen Zusammensetzungen in thermoplastische Polymere eingearbeitet, so stellt man völlig überraschend fest, das Mikrogel-enthaltenden Polymere erhalten werden, die sich wie thermoplastische Elastomere verhalten.

Die Erfindung betrifft weiterhin auch die daraus nach üblichen Verfahren hergestellten Formkörper und Beschichtungen.

Die Erfindung wird mit Blick auf die folgenden Beispiele näher erläutert. Die Erfindung ist selbstverständlich nicht auf diese Beispiele beschränkt.

**Beispiele**

**Beispiel 1: SBR-Gel in Nynas T110**

In dem nachfolgend beschriebenen Beispiel 1 wird gezeigt, dass unter der Verwendung von Mikrogelen auf Basis von SBR erfindungsgemäße Zusammensetzungen, die bestimmte rheologische Charakteristika wie Strukturviskosität, Thixotropie und angenähert Newton'sches Fließverhalten zeigen, erhalten werden.

Daraus ergibt sich der u. a. der Einsatz der erfindungsgemäßen Zusammmensetzung als funktionales und/ oder rheologisches Additiv. Günstige Voraussetzungen für den Einsatz der erfindungsgemäßen Mischungen in Kautschuk oder Kunststoff haben Mikrogele, die die Viskosität wenig beeinflussen, also in erster Näherung Newton'sches Fließverhalten zeigen. Für den Einsatz der erfindungsgemäßen Mischungen in Fetten sind insbesondere Mikrogele geeignet, die die Viskosität stark beeinflussen, also strukturviskoses oder thixotropes Fließverhalten zeigen.

In der nachfolgenden Tabelle ist die Zusammensetzung angegeben:

| 1. Nynas T 110 | 80 % |
| 2. Micromorph 1 P oder 5P | 20 % |
| Summe | 100 % |

Bei Nynas T 110 handelt es sich um hydriertes naphthenisches Öl der Nynas Naphthenics AB.

Micromorph 5P ist ein vernetztes Kautschukgel mit einer OH-Zahl von 4 auf Basis von SBR der Firma Rhein-Chemie Rheinau GmbH. Micromorph 5P besteht aus 40 Gew.-% Styrol, 57,5 Gew.-% Butadien und 2,5 Gew.-% Dicumylperoxid.

Micromorph 1 P ist ein vernetztes, oberflächenmodifiziertes Kautschukgel auf Basis SBR der Fa. RheinChemie Rheinau GmbH. Micromorph 1 P besteht aus 80 Gew.-% Styrol, 12 Gew.-% Butadien, 5 Gew.-% Ethylenglykoldimethacrylat (EGDMA) und 3 Gew.-% Hydroxyethylmethacrylat (HEMA).

Die charakteristischen Daten der SBR-Gele sind in der Tabelle 1 zusammengefasst.

Tab. 1. Eigenschaften der Mikrogele Micromorph 1 P und 5P.

| Produkt | Gel-typ | $D_{50}$ | Tg | Gel-Gehalt | OH-Zahl | Säure-Zahl |
| --- | --- | --- | --- | --- | --- | --- |
| | | [nm] | [°C] | [Gew.-%] | [mg KOH/ $g_{pol.}$] | |
| Micromorph 1 P | SBR | 69 | 56 | 96 | 41 | 0,4 |
| Micromorph 5P | SBR | 50 | keine | 92 | 4 | 0,7 |

In der Tabelle bedeuten:

DCP: Dicumylperoxid

$\underline{d}_{50}$: Der Durchmesser $\overline{d}_{50}$ ist nach DIN 53 206 als der Mittelwert definiert. Es stellt hier den mittleren Teilchendurchmesser der Teilchen im Latex dar. Der Teilchendurchmesser der Latexteilchen wurde hier mittels Ultrazentrifugation bestimmt (W. Scholtan, H. Lange, "Bestimmung der Teilchengrößenverteilung von Latices mit der Ultrazentrifuge", Kolloid-Zeitschrift und Zeitschrift für Polymere (1972) Band 250, Heft, 8). Die Durchmesserangaben im Latex und für die Primärpartikel in den erfindungsgemäßen Zusammensetzungen sind praktisch gleich, da sich die Teilchengröße der Mikrogelteilchen bei der Herstellung der erfindungsgemäßen Zusammensetzung nicht ändert.

Tg: Glastemperatur

Für die Bestimmung von Tg: und ΔTg wird das Gerät DSC-2 von Perkin-Elmer benutzt.

Quellungsindex QI

Der Quellungsindex QI wurde wie folgt bestimmt:

Der Quellungsindex wird aus dem Gewicht des in Toluol bei 23° für 24 Stunden gequollenen lösungsmittelhaltigen Mikrogels und dem Gewicht des trockenen Mikrogels berechnet:

Qi = Naßgewicht des Mikrogels /Trockengewicht des Mikrogels.

Zur Ermittlung des Quellungsindex läßt man 250 mg des Mikrogels in 25 ml Toluol 24 h unter Schütteln quellen. Das mit Toluol gequollene (nasse) Gel wird nach Zentrifugation mit 20.000 Upm gewogen und anschließend bei 70 °C bis zur Gewichtskonstanz getrocknet und nochmals gewogen.

OH-Zahl (Hydroxylzahl)

Die OH-Zahl (Hydroxylzahl) wird nach DIN 53240 bestimmt, und entspricht der Menge an KOH in mg, die der Essigsäure-Menge äquivalent ist, die bei der Acetylierung mit Essigsäureanhydrid von 1 g Substanz freigesetzt wird.

Säurezahl

Die Säurezahl wird wie oben bereits erwähnt nach DIN 53402 bestimmt und entspricht der Menge KOH in mg, die erforderlich ist um ein g des Polymers zu neutralisieren.

Gelgehalt

Der Gelgehalt entspricht dem in Toluol unlöslichen Anteil bei 23°C. Der Gelgehalt ergibt sich aus dem Quotienten des getrockneten Rückstands und der Einwaage und wird in Gewichtsprozent angegeben.

Herstellungsbeispiel 1 zu Micromorph 1P

Micromorph 1 P ist ein Mikrogel auf Basis von hydroxylmodifiziertem SBR, hergestellt durch direkte Emulsionspolymerisation unter Verwendung des vernetzenden Comonomers Ethylenglykoldimethacrylat.

Es werden 325 g des Na-Salzes einer langkettigen Alkylsulfonsäure (330 g Mersolat K30/95 der Bayer AG) und 235 g des Na-Salzes methylenverbrückter Naphthalinsulfonsäure (Baykanol PQ der Bayer AG) in 18,71 kg Wasser gelöst und in einem 40 l-Autoklaven vorgelegt. Der Autoklav wird 3mal evakuiert und mit Stickstoff beaufschlagt. Danach werden 8,82 kg Styrol, 1,32 kg Butadien, 503 g Ethylenglykoldimethacrylat (90%ig), 314 g Hydroxyethylmethacrylat (96%) und 0,75 g Hydrochinonmonomethylether zugegeben. Die Reaktionsmischung wird unter Rühren auf 30°C aufgeheizt. Anschließend wird eine wässrige Lösung bestehend aus 170 g Wasser, 1,69 g Ethylendiamintetraessigsäure (Merck-Schuchardt), 1,35 g Eisen(II)-Sulfat*7H2O, 3,47 g Rongalit C (Merck-Schuchardt) sowie 5,24 g Trinatriumphosphat*12H2O zudosiert. Die Reaktion wird durch Zugabe einer wässrigen Lösung von 2,8 g p-Menthanhydroperoxid (Trigonox NT 50 der Akzo-Degussa) und 10,53 g Mersolat K 30/95, gelöst in 250 g Wasser gestartet. Nach 5 Stunden Reaktionszeit aktiviert man mit einer wässrigen Lösung bestehend aus 250 g Wasser, in dem 10,53 g Mersolat K30/95 und 2,8 g p-Menthanhydroperoxid (Trigonox NT 50) gelöst sind, nach. Bei Erreichen eines Polymerisationsumsatzes von 95-99 % wird die Polymerisation durch Zugabe einer wässrigen Lösung von 25,53 g Diethylhydroxylamin, gelöst in 500 g Wasser, abgestoppt. Danach werden nicht umgesetzte Monomeren durch Strippen mit Wasserdampf aus dem Latex entfernt. Der Latex wird filtriert und wie im Beispiel 2 der US 6399706 mit Stabilisator versetzt, koaguliert und getrocknet.

Micromorph 5P wird analog hergestellt. Die trockenen erfindungsgemäß weiterverarbeiteten Mikrogelpulver Micromorph 1 P und Micromorph 5P wurden aus dem Latex durch Sprühtrocknung gewonnen.

Für die Herstellung der erfindungsgemäßen Zusammensetzung wurde Nynas T 110 vorgelegt und Micromorph 5P unter Rühren mittels Dissolver zugegeben. Die Zusammensetzung wurde viermal bei 950 bar durch den Homogenisator gegeben.

Als Homogenisator wurde der Labor-Hochdruckhomogenisator APV1000 der Fa. Invensys verwendet.

Die rheologischen Eigenschaften der Zusammensetzung wurden mit einem Rheometer, MCR300, der Firma Physica bestimmt. Als Messkörper wurde ein Platte-Kegel-System, CP25-1, benutzt. Die Messungen wurden bei 20°C durchgeführt.

Für die Zusammensetzung aus 80 % Nynas T 110 und 20 % Micromorph 1 P bzw. Micromorph 5P sind einige Messergebnisse in der folgenden Tabelle 2 dargestellt.

Als Vergleich wurden die Fette Li-120H, ein Halbfabrikat, und E301 (15 %), ein Laborprodukt der Firma Rhein-Chemie Rheinau GmbH, mitgemessen.

In der Tabelle sind die Viskositäten $\eta$, die bei Scherraten v' von 5 s$^{-1}$, 100 s$^{-1}$, 1000 s$^{-1}$, 3000 s$^{-1}$ und 0,1 s$^{-1}$ gemessen wurden, dargestellt. Die Messung erfolgte mit einem Messprogramm, bei welchem in der oben genannten Reihenfolge die Messwerte (dynamische Viskositäten $\eta$ etc) erfasst wurden. Als willkürliches Maß für die viskositätserhöhende Wirkung von Mikrogel wurde der Quotient $\eta$ (v'=0,1 s$^{-1}$)/$\eta$ (v'=3000 s$^{-1}$) definiert.

Die Zusammensetzung aus 80 % Nynas T 110 und 20 % Micromorph 5P, welche viermal bei 950 bar durch den Homogenisator gegeben wurde, zeigt ein vergleichbares rheologisches Verhalten wie Li-120H AK33 oder E301, d. h. Micromorph 5P ist als Rohstoff für die Fettherstellung geeignet.

Die Werte in der Tabelle 2 bringen sehr schön zum Ausdruck, welche vielfältigen rheologischen Eigenschaften mit den Mikrogelen erzielt werden können.

Tab. 2. Rheologische Charakterisierung von Mikromorph 1 P bzw. 5P (je 20 Gew.-%) in Nynas T 110; 20°C; Kegel-Platte: CP 25-1.

| Bezeichnung | Charakteristika | $\eta/\nu'$= 5 s⁻¹ [Pas] | $\eta \nu'$ = 100 s⁻¹ [Pas] | $\eta \nu'$ = 1000 s⁻¹ [Pas] | $\eta \nu'$ = 3000 s⁻¹ [Pas] | $\eta \nu'$ = 0,1 s⁻¹ [Pas] | $\eta$ ($\nu'$=0,1 s⁻¹)$\eta$ ($\nu'$=3000 s⁻¹) [ ] | Bemerkungen |
|---|---|---|---|---|---|---|---|---|
| | 0,0935 s⁻¹ | | | | | | | Unadditiviertes Beispielfett (Halbfabrikat) strukturviskos, wenig thixotrop |
| **Li-120H** | statt 0,1 s⁻¹ 0,15 s⁻¹ statt | 375 | 23,3 | | 3,9 - | | 7950 | 2023[3] |
| **E301 (15%)** | 0,1 s⁻¹ | 83 | 14,6 | | 6,6 - | | 2420 | 368[3] | Unadditiviertes Beispielfett; in Mineralöl / strukturviskos |
| AE25648/5[1] | **M. 1P/0x950 bar** | 23,4 | 5,1 | 3,45 | 2,3 | 1350 | 391 | |
| AE25648/5[1] | M. 1P/1x950 bar | 1,81 | 1,42 | 1,24 | 1,11 | 5,9 | 5 | fast newtonsch'sches Fließverhalten |
| AE25648/5[1] | M. 1P/2x950 bar | 2,3 | 1,77 | 1,34 | 1,20 | 1,99 | 1,5 | fast newtonsch'sches Fließverhalten |
| AE25648/5[1] | M. 1P/3x950 bar | 3,9 | 2,01 | 1,42 | 1,25 | 1,72 | 1,2 | leicht thixotrop |
| AE25648/5[1] | M. 1P/4x950 bar | 9,3 | 2,80 | 1,71 | 1,46 | 3,3 | 2 | thixotrop |
| AE25648/6[2] | **M. 5P/0x950 bar** | 6,8 | 1,94 | 1,56 | 1,38 | 2,02 | 1,3 | |
| AE25648/6[2] | M. 5P/1x950 bar | 11,9 | 5,4 | 3,8 | 2,44 | 2150 | 563 | strukturviskos |
| AE25648/6[2] | M. 5P/2x950 bar | 19,6 | 6,0 | 3,6 | 2,34 | 1750 | 489 | strukturviskos |
| AE25648/6[2] | M. 5P/3x950 bar | 33 | 6,8 | 3,6 | 2,36 | 1580 | 444 | strukturviskos |
| AE25648/6[2] | M. 5P/4x950 bar | 57 | 7,7 | 3,6 | 2,40 | 1720 | 475 | strukturviskos, wenig thixotrop |

1) 20 Gew.-% Micromorph 5P in Nynas T 110
2) 20 Gew.-% Micromorph 5P in Nynas T 110
3) $\eta$ ($\nu'$ = 0,1 s⁻¹) / $\eta$ ($\nu'$ = 1000 s⁻¹)

Die gemessenen Werte zeigen eine Verdickung, die bei geeigneter Wahl der Mikrogel/Schmierstoff-Kombination unter dem Aspekt der Rheologie überraschenderweise die Herstellung von Schmierfetten ermöglicht.

Darüber hinaus können mit Mikrogelen in den beschriebenen flüssigen Medien rheologische Eigenschaften gesteuert werden. Die erfindungsgemäßen Zusammensetzungen sind insbesondere interessant als Verdickungsmittel, als Ablauf- und Absetzverhinderungsmittel sowie als rheologisches Additiv.

Die beschriebenen oder ähnliche Zusammensetzungen können vorteilhaft verwendet werden in Schmierfetten, Lacken und Farben, Klebstoffen, Gummi, Kunststoffen und Gelcoats oder thermoplastischen Elastomeren.

Die in Beispiel 1 hergestellten Zusammensetzungen können besonders vorteilhaft in Schmierfetten verwendet werden. Sie führen dort zu besonders günstigen Eigenschaften wie einer hohen Thixotropie oder Strukturviskosität.

Weitere sehr vorteilhafte Eigenschaften, die in die jeweiligen Systeme über die Mikrogele mit eingebracht werden, sind aus den folgenden Beispielen ersichtlich.

**Beispiel 2: Transparenz und Phasentrennung sowie rheologische und tribologische Eigenschaften der Schmierstoffen aus der Kombination 2% Mikrogel - Schmieröl**

In dem nachfolgend beschriebenen Beispiel 2 wird gezeigt, dass unter der Verwendung von Mikrogelen auf Basis von SBR und NBR erfindungsgemäße Zusammensetzungen, die bestimmte Charakteristika bezüglich Transparenz und Separationsstabilität zeigen, erhalten werden.

In der nachfolgenden Tabelle ist die Zusammensetzung angegeben:

| | |
|---|---|
| 1. Schmieröl | 98 % |
| 2. Mikrogel | 2 % |
| Summe | 100 % |

Bei Shell Catenex S 932 handelt es sich um paraffinisches, hochraffiniertes Mineralöl der Deutschen Shell GmbH.

Bei Shell Gravex 921 handelt es sich um hydriertes, naphthenbasisches Fabrikationsöl der Shell&DEA Oil GmbH.

Bei Methylester SU handelt es sich um einen Methylester (Radia 7961) der Oleon NV.

Bei Silikonöl M350 handelt es sich um Polydimethylsiloxan der Bayer MaterialScience AG.

Bei Baylube 68CL handelt es sich um einen Polyether der RheinChemie Rheinau GmbH.

Die Mikrogele OBR 1210 und OBR 1212 sind vernetzte, oberflächenmodifizierte Kautschukgele auf Basis SBR der Fa. RheinChemie Rheinau GmbH. Micromorph 4P ist ein vernetztes, nicht oberflächenmodifiziertes Kautschukgel auf Basis SBR der Fa. RheinChemie Rheinau GmbH.

OBR 1310D ist ein vernetztes, oberflächenmodifiziertes Kautschukgel auf Basis NBR (Tab. 3). Die Mikrogele werden analog hergestellt wie in Beispiel 1 für Micromorph 1 P beschrieben.

Tab. 3. Zusammensetzung der Mikrogele OBR 1210, OBR 1212, OBR 1310D und Micromorph 4P.

| Bezeichnung | Acrylnitril | Butadien | Styrol | TMPTMA | HEMA | Bemerkungen |
|---|---|---|---|---|---|---|
| OBR 1210 | 0 | 51,6 | 34,4 | 12,5 | 1,5 | - |
| OBR 1212 | 0 | 46,5 | 31 | 12,5 | 10 | - |
| OBR 1310D | 23,8 | 61,2 | 0 | 5 | 10 | - |
| Micromorph 4P | | | | | | Wie Micromorph 5P; jedoch 1,5 DCP[1) |

Die charakteristischen Daten der SBR-Gele und des NBR-Gels sind in der Tabelle 4 zusammengefasst.

Tab. 4. Eigenschaften von OBR 1210, OBR 1212, OBR 1310D und Micromorph 4P.

| Mikrogel | Gel-typ | Analytische Daten | | | | | | | | |
|---|---|---|---|---|---|---|---|---|---|---|
| | | $D_{50}$ | $O_{spez.}$ | Teilchen-Dichte | Tg | Gel | QI | OH-Zahl | Säure-zahl | Tg-Stufe DSC/2. Aufhzg. |
| | | [nm] | [m$^2$/g] | [g/ml] | [°C] | [Gew.-%] | | [mg KOH/g] | | [°C] |
| OBR 1210 | SBR | 60 | 102 | 0,993 | -20,0 | 95,4 | 4,9 | 4 | 1,1 | - |
| OBR 1212 | SBR | 55 | 107 | 1,017 | -5,0 | 99,2 | 4,4 | 42 | 1,7 | - |
| OBR 1310 D | NBR | 78 | 80 | 0,992 | -25,0 | 99,4 | 4,9 | 32 | 1,3 | 11,0 |
| Micromorph 4P | SBR | 57 | 111 | - | -15,0 | 94,6 | 9,0 | 8 | 6 | - |

In der Tabelle bedeuten:

$O_{spez.}$: spezifische Oerfläche in m$^2$/g

Breite des Glasübergangs:

Die Breite des Glasübergangs wurde wie oben beschrieben bestimmt. Ansonsten siehe Beispiel 1.

Kontrolle der Homogenität:

Die Proben wurden eine Woche nach der Herstellung auf Separation visuell geprüft.

Kontrolle der Transparenz:

Die Transparenz der Proben wurde visuell überprüft. Proben, die Separation oder Flokkulation zeigten, wurden vor Beurteilung aufgerührt.

Herstellung der erfindungsgemäßen Zusammensetzungen

Für die Herstellung der erfindungsgemäßen Zusammensetzung wurden die jeweiligen Schmieröle vorgelegt und das jeweilige Mikrogel unter Rühren mittels Dissolver zugegeben. Die Mischung wurde mindestens einen Tag lang stehen gelassen und dann mit dem Homogenisator weiterverarbeitet. Die erfindungsgemäßen Zusammensetzung wurde bei Raumtemperatur in den Homogenisator gegeben und bei 900 bis 1000 bar im Batchbetrieb sechsmal durch den Homogenisator gegeben. Beim ersten Durchgang erwärmt sich die Mikrogelpaste auf ca. 40°C, beim zweiten Durchgang auf ca. 70°C. Danach wurde die Mikrogelpaste auf Raumtemperatur durch Stehenlassen abgekühlt und der Vorgang wiederholt, bis sechs Durchgänge erreicht worden sind.

Die rheologischen Eigenschaften der Zusammensetzung wurden mit einem Rheometer, MCR300, der Firma Physica bestimmt. Als Messkörper wurde ein Platte-Kegel-System, CP 50-2, benutzt. Die Messungen wurden bei 40°C durchgeführt.

Für die oben beschriebenen Mikrogele sind einige Messergebnisse in der folgenden Tabelle 5 bis 7 dargestellt.

Tab. 5. Trübung und Separation der mikrogelhaltigen Schmieröle (2% Mikrogel); Raumtemperatur.

| Schmieröl | Mikrogel | Dispergrierung | Trübung | Phasentrennung |
|---|---|---|---|---|
| **Shell Catenex S932** | OBR 1212 | 6 x | Milchig trüb | kein Absetzen |
| | OBR 1310D | 6 x | Mäßig transparent | starkes Absetzen |
| | Micromorph 4P | 6 x | Milchig trüb | starkes Absetzen |
| **Shell Gravex 921** | OBR 1210 | 6 x | Milchig trüb | starkes Absetzen |

(fortgesetzt)

| Schmieröl | Mikrogel | Dispergierung | Trübung | Phasentrennung |
|---|---|---|---|---|
| | OBR 1310D | 6 x | Trüb/mäßig transp. | starkes Absetzen |
| | Micromorph 4P | 6 x | Milchig trüb | kein Absetzen |
| **Methylester SU** | OBR 1210 | 6 x | sehr schwach transparent | kein Absetzen |
| | OBR 1212 | 6 x | Milchig trüb | kein Absetzen |
| | OBR 1310D | 6 x | Milchig trüb | mäßiges Absetzen |
| | Micromorph 4P | 6 x | Milchig trüb | kein Absetzen |
| **Silikonöl M350** | OBR 1210 | 6 x | Milchig trüb | kein Absetzen |
| | OBR 1310D | 6 x | Milchig trüb | Starkes Absetzen |
| | Micromorph 4P | 6 x | Milchig trüb | kein Absetzen |

Aus Tab. 5 ist ersichtlich, dass es viele erfindungsgemäße Zusammensetzungen gibt, die zum einen auf unterschiedlichen Schmierölen basieren und zum anderen nicht absetzen. Insbesondere Micromorph 4P setzt in keiner Kombination ab. Dies ist überraschend, da nur 2 Gew.-% Mikrogel zugesetzt wurden.

Des weiteren wurde eine Zusammensetzung gefunden, die weitgehend transparent ist und nicht separiert, nämlich OBR 1210 in Methylester SU.

Tab. 6. Rheologische Charakterisierung der mikrogelhaltigen Schmieröle; 40°C; Kegel-Platte: Meßsystem CP 50-2.

| Bindemittel | Microgel | Homogenisierung | Vis. (40°C; 5s⁻¹) | Vis. (40°C; 1000s⁻¹) | Vis. (40°C; 3000s⁻¹) | Quotient Vis. (5s-1)/ Vis. (3000s-1) |
|---|---|---|---|---|---|---|
| | | | [mPas] | [mPas] | [mPas] | [mPas] |
| Methylester SU | - | 0x | 1,83 | 3,9 | 5,3 | 0,35 |
| Methylester SU | OBR1310D (2%) | 6x | 23,8 | 5,9 | 6,4 | 3,7 |
| Methylester SU | Micromorph 4P (2%) | 6x | 83,8 | 9,5 | 8,3 | 10, |
| | | | | | | |
| Shell Catenex S932 | - | 0x | 55 | 54 | 53 | 1,0 |
| Shell Catenex S932 | OBR1212 (2%) | 6x | 107 | 64 | 60 | 1,8 |
| | | | | | | |
| Shell Gravex 921 | - | 0x | 19,8 | 21 | 21 | 0,9 |
| Shell Gravex 921 | Micromorph 4P (2%) | 6x | 118 | 34 | 30 | 4,0 |
| | | | | | | |
| Silikonöl M350 | OBR1210 (2%) | 6x | 269 | 244 | 238 | 1,1 |

Aus den Werten der Tabelle 6 ist die rheologische Wirkung der Mikrogele selbst bei einer Konzentration von zwei Prozent deutlich erkennbar; trotzdem ergibt sich eine deutliche Differenzierung in newton'sches, strukturviskoses bzw. thixotropes Fließverhalten. OBR 1210 besitzt in Silikonöl M350 newton'sches Fließverhalten.

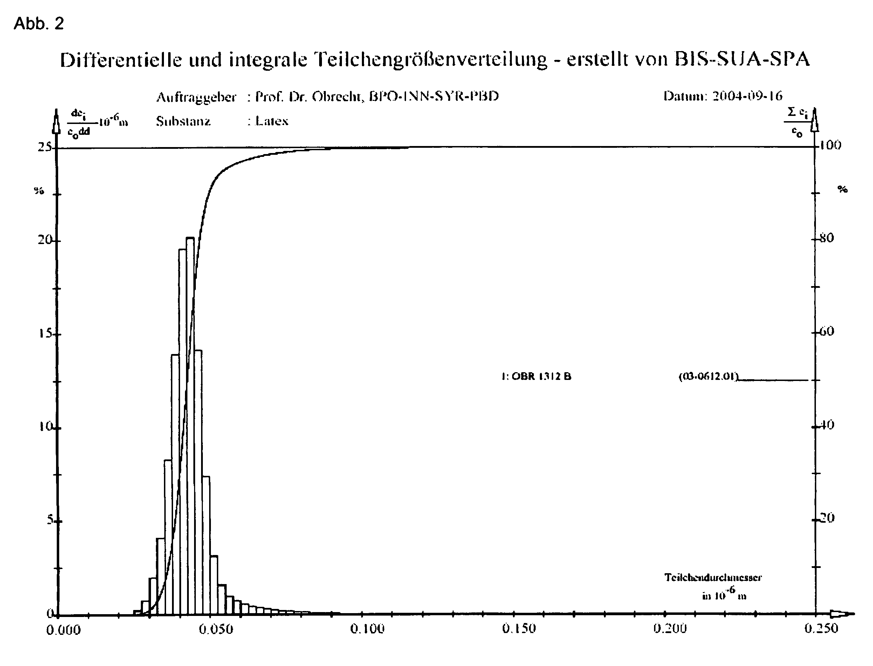

Weiterhin wurden SRV-Tests zur Bestimmung des Reibungskoeffizienten durchgeführt (Tab. 7; Abb. 2a und 2b). Die SRV-Tests wurden in Anlehnung an die ASTM 5706-97 durchgeführt, wobei nicht Kugel-Platte- sondern eine Ring-Platte-Geometrie gewählt wurde:

| 100 CR 6-Stahlring auf 100 CR 6-Stahlplatte geläppt | |
|---|---|
| Frequenz: | 50 Hz |
| Last: | 300 N (nach Bedarf variieren) |
| Temperatur: | 100°C |
| Amplitude : | 1,500 mm |
| Dauer: | 60 Minuten |

Tab. 7. SRV-Test der Kombinationen 2 Gew.-% Mikrogel (OBR 1210) - Schmieröl (Baylube 68CL) sowie von Baylube 68CL zum Vergleich; Ring-Platte.

| Last: 300N | Reibwert | Reibwert | Verschleiß | Aussehen der Reibstelle |
|---|---|---|---|---|
| **100CR6 Stahlring/ 100CR6 Stahlplatte, geläppt** | min | max | d. Platte | |
| 68CL-1210 | 0,025μ | 0,087μ | nicht meßbar | Metallisch blank |
| Baylube 68CL als Referenz | 0,044μ | 0,081 | dto | dto |

Aus der Tabelle 7 ist ersichtlich, dass für die erfindungsgemäße Zusammensetzung OBR 1210/Baylube 68CL gegenüber dem reinen Schmieröl Baylube 68CL ein eindeutig niedrigerer Reibungskoeffizient gefunden wird. Außerdem wird beobachtet, dass auch der Kurvenverlauf bei der Messung glätter ist, was darauf hindeutet, dass die Mikrogele zu einem geringeren Verschleiß an der Oberfläche der Prüfplatte führen.

Das Mikrogel, wie auch viele andere Mikrogele, besitzt überraschenderweise den Reibungskoeffizient mindernde Eigenschaften und kann damit als Reibwertmodifizierer eingesetzt werden.

**Beispiel 3: Phasentrennung sowie rheologische und tribologische Eigenschaften der Schmierstoffen aus der Kombination 10%, 15%, 20% bzw. 30% Mikrogel - Schmieröl**

In dem nachfolgend beschriebenen Beispiel 3 wird gezeigt, dass unter der Verwendung von Mikrogelen auf Basis von SBR und NBR erfindungsgemäße Zusammensetzungen, die bestimmte Charakteristika bezüglich Transparenz und Stabilität hinsichtlich Separation zeigen, erhalten werden können. Weiterhin wird gefunden, dass Schmierfette erhalten werden können.

In der nachfolgenden Tabelle ist die Zusammensetzung der Mikrogelpaste angegeben:

| 1. Schmieröl | 90%, 85%, 80%, 70% |
|---|---|
| 2. Mikrogel | 10%, 15%, 20%, 30% |
| Summe | 100 % |

Bei Shell Catenex S 932 handelt es sich um paraffinisches, hochraffiniertes Mineralöl der Deutschen Shell GmbH.

Bei Methylester SU handelt es sich um einen Methylester (Radia 7961) der Oleon NV.

Bei raffiniertem Rüböl handelt es sich um ein Öl der Cereol Deutschland GmbH, welches aus nachwachsenden Rohstoffen gewonnen wird.

Bei Baylube 68CL handelt es sich um einen Polyether der RheinChemie Rheinau GmbH.

Bei Nynas T 110 handelt es sich um hydriertes naphthenisches Öl der Nynas Naphthenics AB.

Die Mikrogele OBR 1210 und OBR 1212 sind vernezte, oberflächenmodifizierte Kautschukgele auf Basis SBR der Fa. RheinChemie Rheinau GmbH. OBR 1135 und Micromorph 5P sind vernezte, nicht oberflächenmodifizierte Kautschukgele auf Basis BR bzw. SBR der Fa. RheinChemie Rheinau GmbH.

Micromorph 5P ist im Beispiel 1 beschrieben. Die Zusammensetzungen der Mikrogele OBR 1210 und OBR 1212 sind im Beispiel 2 beschrieben. OBR 1135 ist ein BR-Gel; es besteht aus 97,5 % und 2,5% Dicumylperoxid. Die Mikrogele werden hergestellt wie in Beispiel 1 für Micromorph 1 P beschrieben.

Als Vergleich wurden die Fette Li-120H, ein Halbfabrikat, und E301 (15 %) bzw. M10411, Laborprodukte der Firma RheinChemie Rheinau GmbH, mitgemessen.

Die charakteristischen Daten der Mikrogele sind in den Beispielen 1 und 2 zusammengefasst.

Herstellung der erfindungsgemäßen Zusammensetzungen

Die Herstellung der erfindungsgemäßen Zusammensetzung erfolgte wie oben bereits beschrieben. Abweichend hiervon wurde zur Förderung des Materials in den Homogenisator in bestimmten Fällen ein Luftdruck von 1 bis 5 bar benötigt. Die Anzahl der Durchgänge ist im folgenden angegeben.

Die rheologischen Eigenschaften der Zusammensetzung wurden mit einem Rheometer, MCR300, der Firma Physica bestimmt. Als Messkörper wurde ein Platte-Kegel-System, CP 25-1, benutzt. Die Messungen wurden bei 20°C durchgeführt.

Für die oben beschriebenen Mikrogele sind einige Messergebnisse im folgenden dargestellt (Tab. 8-10):

20 und 30%iges Micromorph 5P/Nynas T110 schwitzen wenig Schmieröl aus und sind fest.

Nur 30%iges OBR 1135 bzw. OBR 1210/Nynas T110 schwitzen wenig Schmieröl aus und sind fest.

Auch 20% OBR 1135/Rüböl und 20% Micromorph 5P/Rüböl zeigen keine Separation an der Oberfläche, und dies nach 1,5 Jahren. Auch mit 10 % der gleichen Gele in Rüböl zeigt sich kaum Separation.

Tab. 8. Rheologische Charakterisierung der mikrogelhaltigen Schmierfette; 20°C; Kegel-Platte: Meßsystem CP 25-1.

| Schmieröl | Microgel | Homogenisierung | Vis. (20°C; $5s^{-1}$,) | Vis. (20°C; $100s^{-1}$) | Vis. (20°C; $1000s^{-1}$) | Quotient Vis. ($5s^{-1}$)/ Vis. ($1000s^{-1}$) |
|---|---|---|---|---|---|---|
| | | | [Pas] | [Pas] | [Pas] | [ ] |
| Baylube 68CL | OBR1210 (30%) | 6x | 172 | 20,4 | 5,7 | 30 |
| Shell Catenex S932 | OBR1212 (30%) | 6x | 22,6 | 4,2 | 1,4 | 16 |

Tropfpunkt, Penetration und Ölabscheidevermögen wurden in Anlehnung an die bzw. nach den jeweiligen Normen gemessen:

DIN 51801: Tropfpunkt:

Der Tropfpunkt beschreibt diejenige Temperatur, bei der der erste Tropfen aus dem zu bestimmenden Material austritt und den Boden des Tropfbehälters berührt.

DIN 51580: Penetration:

Unter der Penetration versteht man die Messung der Konsistenz pastöser bzw. wachsartig fester Materialien mittels Eindringen einer konusförmigen Kegelhülle in die Probe. Die Eindringtiefe in 1/10 mm wird als Penetrationswert P angegeben. An unbehandelter Probe: Pu

An gewalkter Probe: Pw,60 (nach 60 Hüben) oder Pw, 100.000 (nach 100.000 Hüben)

DIN 51817: Ölabscheidung:

Die Ölabscheidung ist ein Maß für die Stabilität der Fettmatrix aus Verdicker und Basisflüssigkeit. Die Probe wird beispielsweise bei 40 °C einer bestimmten Zeit nach mit einem Gewicht beschwert. Hierbei tritt während der Belastung Basisflüssigkeit aus der Fettmatrix aus. Bestimmt wird der prozentuale Anteil anBasisflüssigkeit nach der Belastungsdauer bei gegebener Temperatur.

Tab. 9. Physikalische Eigenschaften der Kombinationen 30% Mikrogel (Micromorph 5P, OBR 1135, OBR 1210) - Schmieröl (Baylube 68CL, Methylester SU, Nynas T 110, Shell Catenex S932) sowie von PU-Fett M10411 und Lithium 120H-Fett zum Vergleich. Tropfpunkt, Ruhe- und Walkpenetration.

| | Tropfpunkt | Penetration $P_u$ / $P_w$ 60 | Penetration $P_{w,60.000}$ |
|---|---|---|---|
| | (DIN 51801) | (DIN 51580] | |
| | [°C] | [$^1/_{10}$ mm] | $^1/_{10}$ mm] |
| Li-120H-Fett | 186 | 188/190 | 241 |
| Methylester SU - Micromorph 5P (30%) | 177 | 215 / 214 | 249 |
| Baylube 68CL - OBR1210 (30%) | 174/137 | 238 / 247 | 238 |
| Nynas T110 - OBR 1135 (30%) | >280 | 180 / 191 | 196 |
| Nynas T110 - PU-Fett M 10411 (12%) | | 190 / 213 | 320 |

Das Ölabscheidevermögen (18 h / 40°C) ist für die erfindungsgemäße Zusammensetzung Nynas T110 - OBR 1135 (30%) und das Lithiumfett Li-120H-Fett gleich: 0,29%

Typisch für Fette sind kleine $P_u$- und große $P_{w,60000}$-Werte. Dies wird durch die Messungen an dem Lithium 12fett und dem PU-Fett bestätigt wie aus Tab. 9 ersichtlich ist.

Die Mikrogel-Schmieröl-Kombinationen zeigen geringe oder keine Unterschiede in den Werten für die Ruhe-penetration $P_u$ und die Walkpenetration $P_{w,60000}$. So ist insbesondere die OBR 1210-Baylube 68CL-Kombination scherstabil.

Tab. 10. SRV-Test der Kombinationen 30% Mikrogel (Micromorph 5P, OBR 1210) - Schmieröl (Baylube 68CL, Methylester SU, Shell Catenex S932) sowie von PU-Fett M10411 und Lithium12-Fett zum Vergleich.

| Last: 300N 100CR6 Stahlring/100CR6 Stahlplatte, geläppt | Reibwert min [μm] | Reibwert max [μm] | Verschleiß d. Platte [μm] | Aussehen der Reibstelle |
|---|---|---|---|---|
| Li-120H-Fett unadd. Fa.Fuchs (P 1031) | 0,020 | 0,230 | 2,84 | metall. blank, Umfeld mit viel schwarzem Abrieb. |
| Methylester SU-Micromorph 5P (30%) | 0,095 | 0,295 | 2,07 | metall. blank, Umfeld schwarz mit Riefen. |
| Baylube 68CL-OBR1210 (30%) | 0,045 | 0,080 | Nicht messbar | metall. blank, Umfeld ohne Ablagerungen. |
| PU-Fett M 10411 (12%) in Nynes T110 | 0,075 | > 0,40 | 5,92 | Reibstelle hat Freßer und Tribokorrosion, Umfeld stark schwarze Ablagerungen. |

Die Verlauf der SRV-Kurven zeigt folgendes:

Das OBR 1210-Fett zeigt im Gegensatz zu den Vergleichsfetten einen glatten Kurvenverlauf, der auf niedrigerem Niveau des Reibkoeffizienten endet, und eine metallisch blanke Reibstelle.

Tab. 11 Verschleißtests der Kombinationen 30% Mikrogel (Micromorph 5P, OBR 1210) - Schmieröl (Baylube 68CL, Methylester SU, Shell Catenex S932) sowie von PU-Fett M10411 und Lithium12-Fett zum Vergleich.

|  | VKA Schocklast (in Anlehnung an DIN 51350; DIN-Kugeln) 1000N, 1420rpm,1min | VKA Gut-/Schweißlast (DIN 51350, Teil 4) 1420rpm, 1 min |
|---|---|---|
| Li-12OH-Fett unadd. Fa.Fuchs (P 1031) | 2,60 mm | +1400/-1500 N |
| Methylester SU-Micromorph 5P (30%) | 1,75 mm | +1800 / -1900 N |
| Baylube 68CL-OBR1210 (30%) | 0,78 mm | +1800 / -1900 N |
| PU-Fett M 10411 (12%) in Nynes T110 | 3,50 mm | < 1400 N |

Die Tabelle 11 zeigt, dass erfindungsgemäß die Schocklast und VKA Gut/Schweißlast deutlich verbessert sind.

Beispiel 3 zeigt, dass die erfindungsgemäßen Zusammensetzungen mit einem relativ hohen Gehalts an Mikrogel (15 - 30 %) überraschenderweise mit kommerziellen Fetten vergleichbares Verhalten (Absetzstabilität, geringe Ölabscheidung, Konsistenz) jedoch günstigeres Verhalten (hohe Scherstabilität, d.h. fast keine Änderung der Penetrationswerte nach Walken mit 60.000 Hüben) und außerordentlich hohe Tropfpunkte wie sie sonst nur von wärmefesten Fetten, wie z.B. PU-Fetten oder Ca- Komplexfetten, erreicht werden, zeigen. Zudem zeigen diese Zusammensetzungen eine positive Wirkung auf Reibwerte, was völlig untypisch ist bei Standardfetten.

**Beispiel 4**: Hydroxylgruppenmodifiziertes SBR-Gel OBR 1312B in Baylube 68CL

In dem nachfolgend beschriebenen Beispiel 4 wird gezeigt, daß unter Verwendung von hydroxylgruppenmodifizierten Mikrogelen auf Basis von SBR erfindungsgemäße Zusammensetzungen, die hauptsächlich Primärpartikel mit einem mittleren Teilchendurchmesser von ca. 43 nm enthalten, in einem Homogenisator durch Anwendung von 900 bis 1000 bar mit 2 bis 6 Durchgängen hergestellt werden können.

In der nachfolgenden Tabelle ist die Zusammensetzung angegeben:

| 1. Baylube 68CL | 97,8 |
|---|---|
| 2. OBR 1312B | 2,0 |
| 3. Dispergierhilfsmittel | 0,2 |
| Summe | 100,0 |

Bei Baylube 68CL handelt es sich um einen Polyether der RheinChemie Rheinau GmbH.

Das Mikrogel OBR 1312B ist ein vernetztes, oberflächenmodifiziertes Kautschukgel auf Basis SBR der Fa. RheinChemie Rheinau GmbH(Tab. 12). Das Mikrogel wird analog zu Beispiel 1 für Micromorph 1 P hergestellt.

Tab. 12. Zusammensetzung des Mikrogels OBR 1312B.

| Bezeichnung | Acrylnitril | Butadien | Styrol | TMPTMA | HEMA | Bemerkungen |
|---|---|---|---|---|---|---|
| OBR 1312B | 0 | 46 | 42,5 | 1,5 | 10 | - |

Die charakteristischen Daten von OBR 1312B sind in der Tabelle 13 zusammengefasst.

Tab. 13. Eigenschaften von OBR 1312B.

| Mikrogel | Geltyp | Analytische Daten | | | | | | | | |
|---|---|---|---|---|---|---|---|---|---|---|
| | | $d_{50}$ $d_{50}$ | $O_{spez.}$ $O_{spez.}$ | Teilchen- | Tg | Gel | QI | OH- | Säure- | Tg-Stufe |
| | | | | Dichte | | | | zahl | zahl | DSC/2. Aufhzg. |
| | | [nm] | [m$^2$/g] | [g/ml] | [°C] | [Gew.-%] | | [mg KOH/g] | | [°C] |
| OBR 1312B | SBR | 43 | 141 | 0,996 | -21,5 | 99,9 | 9,7 | 44 | 1,3 | - |

Für die Herstellung der erfindungsgemäßen Zusammensetzung wurde Baylube 68CL vorgelegt und OBR 1312B unter Rühren mittels Dissolver zugeben. Die Mischung wurde mindestens einen Tag lang stehen gelassen und dann mit dem Homogenisator weiterverarbeitet.

Die erfindungsgemäßen Zusammensetzung wurde bei Raumtemperatur in den Homogenisator gegeben und bei 960 bar im Batchbetrieb 6 mal durch den Homogenisator gegeben. Beim ersten Durchgang erwärmt sich die Mikrogelpaste auf ca. 40°C, beim zweiten Durchgang auf ca. 70°C. Danach wurde Mikrogelpaste auf Raumtemperatur abgekühlt und ein drittes und viertes Mal dispergiert. Dies wurde wiederholt bis sechs Durchgänge erreicht waren.

Der Teilchendurchmesser der Latexteilchen wurde mittels Ultrazentrifugation bestimmt (W. Scholtan, H. Lange, "Bestimmung der Teilchengrößenverteilung von Latices mit der Ultrazentrifuge", Kolloid-Zeitschrift und Zeitschrift für Polymere (1972) Band 250, Heft, 8).

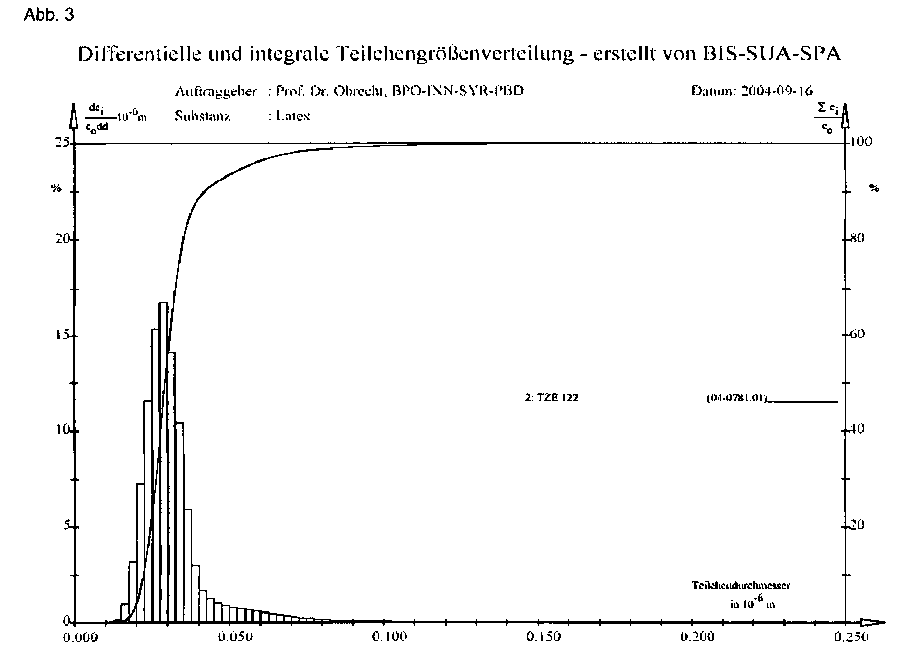

In den folgenden Abbildungen 2 und 3 sind die Teilchengrößenverteilungen des ursprünglichen, noch nicht getrockneten Latex des OBR 1312B-Mikrogels und des in Baylube 68CL redispergierten OBR 1312B (TZE 122) zu sehen.

Es ist ersichtlich, dass es überraschenderweise gelungen ist, fast die gesamte Menge des getrockneten und damit agglomerierten OBR-Pulvers bis zu den Primärteilchen zu redispergieren, wobei der mittlere Teilchendurchmesser der redispergierten Mischung sogar unterhalb des mittleren Teilchendurchmessers des Ursprungslatex liegt. Zusätzlich ist zu beachten, dass die Messung an einer 6 Monate bei Raumtemperatur gelagerten, redispergierten Probe durchgeführt wurde, d.h. die Dispersionen überraschend über 6 Monate stabil blieb.

Außerdem ist die redispergierte Zusammensetzung aufgrund ihres niedrigen Anteils an reagglomerierten Teilchen hoch transparent.

**Patentansprüche**

1. Zusammensetzung, enthaltend mindestens ein nicht-vernetzbares organisches Medium (A), welches bei einer Temperatur von 120°C eine Viskosität von weniger als 30000 mPas aufweist, und mindestens ein Mikrogel (B), **dadurch gekennzeichnet, dass** das Mikrogel (B) durch Emulsionspolymerisation erhältlich ist und in einer Menge von 2 bis 90 Gew.-%, bezogen auf die Gesamtmenge der Zusammensetzung, in der Zusammensetzung vorliegt.

2. Zusammensetzung nach Anspruch 1, worin das nicht-vernetzbare, organische Medium (A) bei einer Temperatur von 120°C eine Viskosität von weniger als 1000 mPas aufweist.

3. Zusammensetzung nach Anspruch 1, worin das nicht-vemetzbare, organische Medium (A) bei einer Temperatur von 120°C eine Viskosität von weniger als 200 mPas aufweist.

4. Zusammensetzung nach den Ansprüchen 1 bis 3, **dadurch gekennzeichnet, dass** die Primärpartikel des Mikrogels (B) eine annähernd kugelförmige Geometrie aufweisen.

5. Zusammensetzung nach den Ansprüchen 1 oder 4, **dadurch gekennzeichnet, dass** die Abweichung der Durchmesser eines einzelnen Primärpartikels des Mikrogels (B), definiert als

$$[ (d1 - d2) / d2] \times 100,$$

worin d1 und d2 zwei beliebige Durchmesser des Primärpartikels sind und d1 > d2 ist, weniger als 250 % beträgt.

6. Zusammensetzung nach Anspruch 5, worin die genannte Abweichung weniger als 50 % beträgt.

7. Zusammensetzung nach einem der Ansprüche 1 bis 6, **dadurch gekennzeichnet, dass** die Primärpartikel des Mikrogels (B) eine durchschnittliche Teilchengröße von 5 bis 500 nm aufweisen.

8. Zusammensetzung nach einem der Ansprüche 1 bis 6, **dadurch gekennzeichnet, dass** die Primärpartikel des Mikrogels (B) eine durchschnittliche Teilchengröße von weniger als 99 nm aufweisen.

9. Zusammensetzung nach einem der Ansprüche 1 bis 8, **dadurch gekennzeichnet, dass** die Mikrogele (B) in Toluol bei 23°C unlösliche Anteile von mindestens 70 Gew.-% aufweisen.

10. Zusammensetzung nach einem der Ansprüche 1 bis 9, **dadurch gekennzeichnet, dass** die Mikrogele (B) in Toluol bei 23°C einen Quellungsindex von weniger als 80 aufweisen.

11. Zusammensetzung nach einem der Ansprüche 1 bis 10, **dadurch gekennzeichnet, dass** die Mikrogele (B) Glastemperaturen von -100°C bis +120°C aufweisen.

12. Zusammensetzung nach einem der Ansprüche 1 bis 11, **dadurch gekennzeichnet, dass** das Mikrogel (B) ein vernetztes Mikrogel ist, dass nicht durch energiereiche Strahlung vernetzt ist.

13. Zusammensetzung nach einem der Ansprüche 1 bis 12, **dadurch gekennzeichnet, dass** die Mikrogele (B) eine Breite des Glasübergangsbereichs von größer als 5 °C aufweisen.

14. Zusammensetzung nach einem der Ansprüche 1 bis 13, **dadurch gekennzeichnet, dass** das Mikrogel (B) auf Kautschuk basiert.

15. Zusammensetzung nach einem der Ansprüche 1 bis 14, **dadurch gekennzeichnet, dass** das Mikrogel (B) auf Homopolymeren oder statistischen Copolymeren basiert.

16. Zusammensetzung nach einem der Ansprüche 1 bis 15, **dadurch gekennzeichnet, dass** das Mikrogel (B) durch funktionelle, gegenüber C=C-Doppelbindungen reaktive Gruppen modifiziert ist.

17. Zusammensetzung nach einem der Ansprüche 1 bis 16, worin das nicht-vernetzbare Medium (A) mindestens eine Verbindung ist, die aus der Gruppe ausgewählt wird, die aus Lösemitteln, gesättigten oder aromatischen Kohlenwasserstoffen, Polyetherölen, natürlichen und synthetischen Esterölen, Polyetheresterölen, Phosphorsäureestern, siliciumhaltigen Ölen, Halogenkohlenwasserstoffen und flüssigen nachwachsenden Rohstoffen besteht.

18. Zusammensetzung nach einem der Ansprüche 1 bis 17, **dadurch gekennzeichnet, dass** sie 10 bis 99,9 Gew.-% des nicht-vernetzbaren organischen Mediums (A) enthält.

19. Zusammensetzung nach einem der Ansprüchen 1 bis 18, **dadurch gekennzeichnet, dass** sie zusätzlich Füllstoffe und/oder Additive enthält.

20. Zusammensetzung nach einem der Ansprüche 1 bis 19, **dadurch gekennzeichnet, dass** sie durch Mischen des nicht-vernetzbaren Mediums (A) und des Mikrogels (B) mittels eines Homogenisators, einer Perlmühle (Rührwerkskugelmühle), einer Dreiwalze, einer Ein- oder Mehrwellen-Extruderschnecke, eines Kneters, eines Ultra-Turrax-Gerätes und/oder eines Dissolvers hergestellt worden ist.

21. Zusammensetzung nach Anspruch 20, **dadurch gekennzeichnet, dass** sie mittels eines Homogenisators, einer Perlmühle (Rührwerkskugelmühle), einer Dreiwalze oder eines Dissolvers hergestellt worden ist.

22. Zusammensetzung nach einem der Ansprüche 1 bis 21, **dadurch gekennzeichnet, dass** sie eine Viskosität von 2 mPas bis zu 50000000 mPas bei einer Drehzahl von 5 s$^{-1}$, bestimmt mit einem Kegel-Platte-Meßsystem nach DIN 53018 bei 20°C aufweist.

23. Zusammensetzung nach einem der Ansprüche 1 bis 22, **dadurch gekennzeichnet, daß** das Mikrogel (B) einen Quellungsindex in Toluol bei 23 °C von 1 bis 15 besitzt.

24. Zusammensetzung nach einem der Ansprüche 1 bis 23, **dadurch gekennzeichnet, dass** die Mikrogele (B) in Toluol bei 23°C unlösliche Anteile von mindestens 95 Gew.-% aufweisen.

25. Zusammensetzung nach einem der Ansprüche 1 bis 24, **dadurch gekennzeichnet, daß** das Mikrogel nicht mit Hydroxylgruppen modifiziert ist.

26. Zusammensetzung nach einem der Ansprüche 1 bis 25, **dadurch gekennzeichnet, daß** das Mikrogel nicht modifiziert ist.

27. Verwendung der Zusammensetzung nach einem der Ansprüche 1 bis 26 zur Einarbeitung in thermoplastische Kunststoffe, Kautschuke oder thermoplastische Elastomere.

28. Verwendung der Zusammensetzung nach einem der Ansprüche 1 bis 27 zur Herstellung von Mikrogel-enthaltenden Polymeren.

29. Verwendung nach Anspruch 28 zur Herstellung von Mikrogel-enthaltenden Kautschuken.

30. Verwendung nach Anspruch 28 zur Herstellung von Mikrogel-enthaltenden thermoplastischen Elastomeren.

31. Verwendung der Zusammensetzungen nach einem der Ansprüche 1 bis 26 zur Herstellung von Schmierstoffen, Formkörpern oder Beschichtungen.

32. Verwendung der Zusammensetzung nach Anspruch 31 zur Herstellung von Schmierfetten oder modifizierten Schmierölen.

33. Verwendung der Zusammensetzungen nach einem der Ansprüche 1 bis 26 als Additiv für Kunststoffe, Kautschuke, Beschichtungsmittel oder Schmiermittel.

34. Verwendung von durch Emulsionspolymerisation erhältlichen Mikrogelen als rheologisches Additiv in nicht-vernetzbaren organischen Medien, welche bei einer Temperatur von 120°C eine Viskosität von weniger als 30000 mPas aufweisen.

35. Verwendung von Mikrogelen nach Anspruch 34 als Verdicker oder Thixotropiermittel.

36. Kunststoffe, Kautschuke, thermoplastische Elastomere, Beschichtungsmittel oder Schmiermittel, enthaltend die Zusammensetzungen nach einem der Ansprüche 1 bis 26.

37. Verfahren zur Herstellung der Zusammensetzung nach einem der Ansprüche 1 bis 26, **dadurch gekennzeichnet, dass** die Komponenten (A) und (B) gemeinsam der Behandlung mit einem Homogenisator, einer Perlmühle, einer Dreiwalze, einer Ein- oder Mehrwellen-Extruderschnecke, eines Kneters und/oder eines Dissolvers unterworfen werden.

38. Verfahren zur Herstellung der Zusammensetzung nach einem der Ansprüche 1 bis 26, **dadurch gekennzeichnet, dass** die Komponenten (A) und (B) gemeinsam der Behandlung mit einem Homogenisator, einer Perlmühle, einer Dreiwalze und/oder eines Dissolvers unterworfen werden.

**Claims**

1. Composition comprising at least one non-crosslinkable organic medium (A) which has a viscosity of less than 30,000 mPas at a temperature of 120°C and at least one microgel (B), **characterised in that** the microgel (B) is obtainable by emulsion polymerization and is present in the composition in an amount of 2 to 90 wt %, based on the total amount of the composition.

2. Composition according to claim 1, wherein the non-crosslinkable organic medium (A) has a viscosity of less than 1,000 mPas at a temperature of 120°C.

3. Composition according to claim 1, wherein the non-crosslinkable organic medium (A) has a viscosity of less than 200 mPas at a temperature of 120°C.

4. Composition according to claims 1 to 3, **characterised in that** the primary particles of the microgel (B) have an approximately spherical geometry.

5. Composition according to claims 1 or 4, **characterised in that** the deviation of the diameters of an individual primary particle of the microgel (B), defined as

$$[ (d1 - d2) / d2] \times 100,$$

wherein d1 and d2 are any two desired diameters of the primary particle and d1 is >d2, is less than 250%.

6. Composition according to claim 5, wherein said deviation is less than 50%.

7. Composition according to one of claims 1 to 6, **characterised in that** the primary particles of the microgel (B) have an average particle size of 5 to 500 nm.

8. Composition according to one of claims 1 to 6, **characterised in that** the primary particles of the microgel (B) have an average particle size of less than 99 nm.

9. Composition according to one of claims 1 to 8, **characterised in that** the microgels (B) have contents which are insoluble in toluene at 23°C of at least about 70 wt %.

10. Composition according to one of claims 1 to 9, **characterised in that** the microgels (B) have a swelling index in toluene at 23°C of less than 80.

11. Composition according to one of claims 1 to 10, **characterised in that** the microgels (B) have glass transition temperatures of -100°C to +120°C.

12. Composition according to one of claims 1 to 11, **characterised in that** the microgel (B) is a crosslinked microgel which is not crosslinked by high-energy radiation.

13. Composition according to one of claims 1 to 12, **characterised in that** the microgels (B) have a width of the glass transition range of greater than 5°C.

14. Composition according to one of claims 1 to 13, **characterised in that** the microgel (B) is based on rubber.

15. Composition according to one of claims 1 to 14, **characterised in that** the microgel (B) is based on homopolymers or random copolymers.

16. Composition according to one of claims 1 to 15, **characterised in that** the microgel (B) is modified by functional groups which are reactive towards C=C double bonds.

17. Composition according to one of claims 1 to 16, wherein the non-crosslinkable medium (A) is at least one compound which is chosen from the group which consists of solvents, saturated or aromatic hydrocarbons, polyether oils, naturally occurring and synthetic ester oils, polyether-ester oils, phosphoric acid esters, silicon-containing oils, halohydrocarbons and liquid renewable raw materials.

18. Composition according to one of claims 1 to 17, **characterised in that** it comprises 10 to 99.9 wt % of the non-crosslinkable organic medium (A).

19. Composition according to one of claims 1 to 18, **characterised in that** it additionally comprises fillers and/or additives.

20. Composition according to one of claims 1 to 19, **characterised in that** it has been prepared by mixing the non-crosslinkable medium (A) and the microgel (B) by means of a homogenizer, a bead mill (stirred ball mill), a triple-roll mill, a single- or multiple-screw extruder, a kneader, an Ultra-Turrax apparatus and/or a dissolver.

21. Composition according to claim 20, **characterised in that** it has been prepared by means of a homogenizer, a bead mill (stirred ball mill), a triple-roll mill or a dissolver.

22. Composition according to one of claims 1 to 21, **characterised in that** it has a viscosity of 2 mPas up to 50,000,000 mPas at a speed of 5 s$^{-1}$, determined with a cone-plate measuring system in accordance with DIN 53018 at 20°C.

23. Composition according to one of claims 1 to 22, **characterised in that** the microgel (B) has a swelling index in toluene at 23°C of 1 to 15.

24. Composition according to one of claims 1 to 23, **characterised in that** the microgels (B) have contents which are insoluble in toluene at 23°C of at least about 95 wt %.

25. Composition according to one of claims 1 to 24, **characterised in that** the microgel is not modified with hydroxyl groups.

26. Composition according to one of claims 1 to 25, **characterised in that** the microgel is not modified.

27. Use of the composition according to one of claims 1 to 26 for incorporation into thermoplastics, rubbers or thermoplastic elastomers.

28. Use of the composition according to one of claims 1 to 27 for the preparation of microgel-containing polymers.

29. Use according to claim 28 for the preparation of microgel-containing rubbers.

30. Use according to claim 28 for the preparation of microgel-containing thermoplastic elastomers.

31. Use of the compositions according to one of claims 1 to 26 for the preparation of lubricants, shaped articles or coatings.

32. Use of the composition according to claim 31 for the preparation of lubricating greases or modified lubricating oils.

33. Use of the compositions according to one of claims 1 to 26 as an additive for plastics, rubbers, coating compositions or lubricants.

34. Use of microgels obtainable by emulsion polymerization as a rheological additive in non-crosslinkable organic media which have a viscosity of less than 30,000 mPas at a temperature of 120°C.

35. Use of microgels according to claim 34 as a thickener or thixotropic agent.

36. Plastics, rubbers, thermoplastic elastomers, coating compositions or lubricants comprising the compositions according to one of claims 1 to 26.

37. Process for the preparation of the composition according to one of claims 1 to 26, **characterised in that** components (A) and (B) are subjected together to the treatment with a homogenizer, a bead mill, a triple-roll mill, a single- or multiple-screw extruder, a kneader and/or a dissolver.

38. Process for the preparation of the composition according to one of claims 1 to 26, **characterised in that** components (A) and (B) are subjected together to the treatment with a homogenize, a bead mill, a triple-roll mill and/or a dissolver.

**Revendications**

1. Composition contenant au moins un milieu organique non réticulable (A) qui présente, à une température de 120 °C, une viscosité inférieure à 30.000 mPa.s, et au moins un microgel (B), **caractérisée en ce que** le microgel (B) est obtenu par polymérisation d'émulsion et est présent dans la composition en une quantité de 2 à 90 % en poids, rapporté à la quantité totale de la composition.

2. Composition selon la revendication 1, dans laquelle le milieu organique non réticulable (A) présente, à une température de 120 °C, une viscosité inférieure à 1000 mPa.s.

3. Composition selon la revendication 1, dans laquelle le milieu organique non réticulable (A) présente, à une température de 120 °C, une viscosité inférieure à 200 mPa.s.

4. Composition selon les revendications 1 à 3, **caractérisée en ce que** les particules primaires du microgel (B) présentent une géométrie approximativement sphérique.

5. Composition selon la revendication 1 ou 4, **caractérisée en ce que** la déviation du diamètre d'une particule primaire individuelle du microgel (B), que l'on définit ainsi

$$[(d1 - d2)/d2] \times 100$$

où d1 et d2 représentent deux diamètres quelconques de la particule primaire et d1 > d2, s'élève à une valeur inférieure à 250 %.

6. Composition selon la revendication 5, dans laquelle la déviation mentionnée s'élève à une valeur inférieure à 50 %.

7. Composition selon l'une quelconque des revendications 1 à 6, **caractérisée en ce que** les particules primaires du microgel (B) présentent une granulométrie moyenne de 5 à 500 nm.

8. Composition selon l'une quelconque des revendications 1 à 6, **caractérisée en ce que** les particules primaires du microgel (B) présentent une granulométrie inférieure à 99 nm.

9. Composition selon l'une quelconque des revendications 1 à 8, **caractérisée en ce que** les microgels (B) présentent des fractions insolubles dans du toluène à 23 °C à concurrence d'au moins 70 % en poids.

10. Composition selon l'une quelconque des revendications 1 à 9, **caractérisée en ce que** les microgels (B) présentent un indice de gonflement dans du toluène à 23 °C inférieur à 80.

11. Composition selon l'une quelconque des revendications 1 à 10, **caractérisée en ce que** les microgels (B) présentent des températures de transition vitreuse de -100 °C à +120 °C.

12. Composition selon l'une quelconque des revendications 1 à 11, **caractérisée en ce que** le microgel (B) est un microgel réticulé qui n'a pas été réticulé par exposition à un rayonnement riche en énergie.

13. Composition selon l'une quelconque des revendications 1 à 12, **caractérisée en ce que** les microgels (B) présentent une largeur de la plage de transition vitreuse supérieure à 5 °C.

14. Composition selon l'une quelconque des revendications 1 à 13, **caractérisée en ce que** le microgel (B) est à base de caoutchouc.

15. Composition selon l'une quelconque des revendications 1 à 14, **caractérisée en ce que** le microgel (B) est à base d'homopolymères ou de copolymères statistiques.

16. Composition selon l'une quelconque des revendications 1 à 15, **caractérisée en ce que** le microgel (B) a été modifié par des groupes fonctionnels aptes à réagir vis-à-vis de liaisons doubles C=C.

17. Composition selon l'une quelconque des revendications 1 à 16, **caractérisée en ce que** le milieu non réticulable (A) représente au moins un composé qui est choisi parmi le groupe qui est constitué par des solvants, des hydrocarbures saturés ou aromatiques, des huiles de polyéthers, des huiles d'esters naturels et synthétiques, des huiles de polyéther-esters, des esters d'acides phosphoriques, des huiles contenant du silicium, des hydrocarbures halogénés et des matières premières renouvelables liquides.

**18.** Composition selon l'une quelconque des revendications 1 à 17, **caractérisée en ce qu'**elle contient le milieu organique non réticulable (A) à concurrence de 10 à 99,9 % en poids.

**19.** Composition selon l'une quelconque des revendications 1 à 18, **caractérisée en ce qu'**elle contient en outre des substances de charge et/ou des additifs.

**20.** Composition selon l'une quelconque des revendications 1 à 19, **caractérisée en ce qu'**elle a été préparée par mélange du milieu non réticulable (A) et du microgel (B) au moyen d'un homogénéisateur, d'un broyeur à billes (un mélangeur-broyeur à billes), d'un dispositif à trois cylindres, d'une extrudeuse à vis sans fin monocylindrique ou polycylindrique, d'un malaxeur, d'un appareil ultra-turrax et/ou d'un Dissolver.

**21.** Composition selon la revendication 20, **caractérisée en ce qu'**elle a été préparée au moyen d'un homogénéisateur, d'un broyeur à billes (un mélangeur-broyeur à billes), d'un dispositif à trois cylindres ou d'un Dissolver.

**22.** Composition selon l'une quelconque des revendications 1 à 21, **caractérisée en ce qu'**elle présente une viscosité de 2 mPa.s à 50.000.000 mPa.s à une vitesse de rotation de 5 s$^{-1}$, déterminée au moyen d'un système de mesure plan-cône conformément à la norme DIN 53018 à 20 °C.

**23.** Composition selon l'une quelconque des revendications 1 à 22, **caractérisée en ce que** le microgel (B) possède un indice de gonflement dans du toluène à 23 °C s'élevant de 1 à 15.

**24.** Composition selon l'une quelconque des revendications 1 à 23, **caractérisée en ce que** les microgels (B) présentent des fractions insolubles dans du toluène à 23 °C, à concurrence d'une valeur inférieure à 95 %.

**25.** Composition selon l'une quelconque des revendications 1 à 24, **caractérisée en ce que** le microgel n'a pas été modifié avec des groupes hydroxyle.

**26.** Composition selon l'une quelconque des revendications 1 à 25, **caractérisée en ce que** le microgel n'a pas été modifié.

**27.** Utilisation de la composition selon l'une quelconque des revendications 1 à 26, pour son incorporation dans des matières synthétiques thermoplastiques, dans du caoutchouc ou dans des élastomères thermoplastiques.

**28.** Utilisation de la composition selon l'une quelconque des revendications 1 à 27, pour la préparation de polymères contenant un microgel.

**29.** Utilisation selon la revendication 28, pour la préparation de caoutchoucs contenant un microgel.

**30.** Utilisation selon la revendication 28, pour la préparation d'élastomères thermoplastiques contenant un microgel.

**31.** Utilisation des compositions selon l'une quelconque des revendications 1 à 26, pour la préparation de lubrifiants, de corps moulés ou d'enductions.

**32.** Utilisation de la composition selon la revendication 31, pour la préparation de graisses lubrifiantes ou d'huiles lubrifiantes modifiées.

**33.** Utilisation des compositions selon l'une quelconque des revendications 1 à 26, à titre d'additif pour des matières synthétiques, des caoutchoucs, des agents d'enduction ou des lubrifiants.

**34.** Utilisation de microgels que l'on obtient par polymérisation en émulsion, à titre d'additif rhéologique dans des milieux organiques non réticulables, qui présentent, à une température de 120° Celsius, une viscosité qui est inférieure à 30.000 mPa.s.

**35.** Utilisation de microgels selon la revendication 34, à titre d'épaississants ou d'agents thixotropes.

**36.** Matières synthétiques, caoutchoucs, élastomères thermoplastiques, agents d'enduction ou lubrifiants, contenant les compositions selon l'une quelconque des revendications 1 à 26.

**37.** Procédé pour la préparation de la composition selon l'une quelconque des revendications 1 à 26, **caractérisé en ce qu'**on soumet les composants (A) et (B) de manière conjointe à un traitement avec un homogénéisateur, un broyeur à billes (un mélangeur-broyeur à billes), un dispositif à trois cylindres, une extrudeuse à vis sans fin monocylindrique ou polycylindrique, un malaxeur et/ou un Dissolver.

**38.** Procédé pour la préparation de la composition selon l'une quelconque des revendications 1 à 26, **caractérisé en ce qu'**on soumet les composants (A) et (B) de manière conjointe à un traitement avec un homogénéisateur, un broyeur à billes, un dispositif à trois cylindres et/ou un Dissolver.

Abb. 1: Funktionsweise des Homogenisierventils

**Abb. 2**

## Differentielle und integrale Teilchengrößenverteilung - erstellt von BIS-SUA-SPA

Auftraggeber : Prof. Dr. Obrecht, BPO-INN-SYR-PBD        Datum: 2004-09-16

$\frac{dc_i}{c_o dd}10^{-6}m$   Substanz    : Latex

I: OBR 1312 B        (03-0612.01)

Teilchendurchmesser in $10^{-6}$ m

# Abb. 3

## Differentielle und integrale Teilchengrößenverteilung - erstellt von BIS-SUA-SPA

Auftraggeber : Prof. Dr. Obrecht, BPO-INN-SYR-PBD          Datum: 2004-09-16

Substanz : Latex

2: TZE 122          (04-0781.01)

Teilchendurchmesser in $10^{-6}$ m

EP 1 664 157 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 4220563
- GB PS1078400 A
- EP 405216 A
- EP 854171 A
- EP 0953615 A2
- EP 0953615 A3
- US 20030088036 A1
- EP 1262510 A1
- DE 2910154
- DE 3742180 A
- DE 4220563 A
- DE 19701489
- DE 19701488
- DE 19834804
- DE 19834803
- DE 19834802
- DE 19929347
- DE 19939865
- DE 19942620
- DE 19942614
- DE 10021070
- DE 10038488
- DE 10039749
- DE 10052287
- DE 10056311
- DE 10061174
- US 5302696 A
- US 5442009 A
- US PS2187146 A
- US 6399706 B

### In der Beschreibung aufgeführte Nicht-Patentliteratur

- *In Chinese Journal of Polymer Science,* 2002, vol. 20 (2), 93-98
- **P. PÖTSCHKE et al.** *Kautschuk Gummi Kunststoffe,* 1997, vol. 50 (11), 787
- *Chinese Journal of Polymer Science,* 2002, vol. 20 (2), 93-98
- **LACKE ; DRUCKFARBEN.** Römpp Lexikon. Georg Thieme Verlag, 1998
- **H.G. ELIAS.** Makromoleküle, Band 2, Technologie. 1992, vol. 2, 99 ff
- **HOUBEN-WEYL.** Methoden der organischen Chemie. vol. 14/2, 848
- Ullmanns Enzyklopädie der technischen Chemie. Verlag Chemie Weinheim, 1981, vol. 20, 457ff, 504, 507ff, 517-518524
- **BROCK ; THOMAS ; GROTEKLAES ; MICHAEL ; MISCHKE ; PETER.** Lehrbuch der Lacktechnologie. Vincentz Verlag Hannover, 1998, 93ff
- **W. SCHOLTAN ; H. LANGE.** Bestimmung der Teilchengrößenverteilung von Latices mit der Ultrazentrifuge. *Kolloid-Zeitschrift und Zeitschrift für Polymere,* 1972, vol. 250, 8